(19) Europäisches Patentamt
European Patent Office
Office européen des brevets

(11) EP 3 318 163 B1

(12) EUROPEAN PATENT SPECIFICATION

(45) Date of publication and mention
of the grant of the patent:
29.12.2021 Bulletin 2021/52

(51) Int Cl.:
A47J 27/09 $^{(2006.01)}$     H01H 35/24 $^{(2006.01)}$
A47J 27/62 $^{(2006.01)}$     A47J 27/00 $^{(2006.01)}$

(21) Application number: 16908360.7

(86) International application number:
PCT/CN2016/095335

(22) Date of filing: 15.08.2016

(87) International publication number:
WO 2018/018670 (01.02.2018 Gazette 2018/05)

(54) **EXCESS PRESSURE PROTECTION SWITCH AND PRESSURE APPLIANCE PROVIDED WITH SAME**

ÜBERDRUCKSCHUTZSCHALTER UND DRUCKGERÄT DAMIT

COMMUTATEUR DE PROTECTION CONTRE LES SURPRESSIONS ET APPAREIL DE PRESSION MUNI DE CELUI-CI

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 26.07.2016  CN 201610600181
26.07.2016  CN 201620795634 U
26.07.2016  CN 201610599504
26.07.2016  CN 201620794757 U
26.07.2016  CN 201610600108
26.07.2016  CN 201620798426 U
26.07.2016  CN 201610600110
26.07.2016  CN 201620795633 U
26.07.2016  CN 201620799044 U
26.07.2016  CN 201620799045 U
26.07.2016  CN 201620799043 U

(43) Date of publication of application:
09.05.2018 Bulletin 2018/19

(73) Proprietor: Foshan Shunde Midea Electrical
Heating
Appliances Manufacturing Co., Limited
Beijiao, Shunde
Foshan
Guangdong 528311 (CN)

(72) Inventors:
• LV, Weigang
Foshan
Guangdong 528311 (CN)
• LEE, Hoseob
Foshan
Guangdong 528311 (CN)

(74) Representative: RGTH
Patentanwälte PartGmbB
Neuer Wall 10
20354 Hamburg (DE)

(56) References cited:
CN-A- 101 947 056      CN-A- 103 876 617
CN-A- 105 982 530      CN-U- 202 919 915
CN-U- 202 919 915      CN-U- 202 940 184
CN-U- 203 150 472      CN-U- 203 690 209
CN-Y- 201 332 057      GB-A- 631 185
US-A1- 2013 199 635

## Description

## FIELD

The present disclosure relates to a field of household appliances, more particularly to an overpressure protection switch and a pressure appliance having the same.

## BACKGROUND

In the related art, a normal pressure application range of an electric pressure cooker is 70kPa (kilopascal). During a normal use of the electric pressure cooker, a normal pressure relief is realized by employing a relief valve or creating a leak between a cooker body and a cover of the electric pressure cooker (in which case the electric pressure cooker is an elastic pressure cooker). However, when the relief valve is failed or the leak cannot be normally created between the cooker body and the cover to exhaust a gas within the electric pressure cooker, the electric pressure cooker is prone to burst, which thus may cause injury to a user.

CN 202919915 U discloses an electric pressure cooker with a manual resetting pressure switch, wherein the manual resetting pressure switch is designed to automatically switch off a heating device of the electric pressure cooker when the pressure inside the cooker is too high.

CN 203150472 U discloses an adjustable pressure microswitch, which comprises a touch part controlled by medium pressure, an electrical assembly which perform switching on and off by being touched by a touch assembly, the electrical assembly is controllably connected to a pump, and a rotary knob assembly which is installed on the electrical assembly for regulating the distance for the touch assembly to contact with the electrical assembly to perform switching on and off so as to regulate the pressure value of the adjustable pressure microswitch.

## SUMMARY

The present disclosure seeks to solve at least one of the problems existing in the related art. An objective of the present disclosure is to provide an overpressure protection switch having a simple structure, and when the overpressure protection switch is applied to a pressure appliance, use safety of the pressure appliance can be effectively ensured.

Another objective of the present disclosure is to provide a pressure appliance having the overpressure protection switch mentioned above.

The overpressure protection switch according to a first aspect of the present disclosure includes: a switch body defining a communicating opening; a first switch terminal disposed in the switch body and having a first contact; a second switch terminal disposed in the switch body, a first end of the second switch terminal being a fixed end, a second end of the second switch terminal being a movable end and having a second contact, and the second contact being normally in contact with the first contact; an actuating device disposed between the second switch terminal and the communicating opening; a sealing device disposed at the communicating opening to isolate an interior of the switch body from the communicating opening, and the sealing device being connected to the actuating device; a holding device disposed in the switch body, in which when an environmental pressure applied by an external environment through the communicating opening reaches a predetermined pressure, the sealing device drives the actuating device to actuate the second switch terminal, such that the second contact moves from a contact position where the second contact is normally in contact with the first contact to a disconnected position where the second contact is separated from the first contact, and the holding device keeps the second contact in the disconnected position, wherein the switch body is provided with a fixing seat therein, the fixing seat defines a guiding hole, and the first switch terminal and the second switch terminal are fixed to the fixing seat, the actuating device includes: an actuating rod disposed in the guiding hole, a first end of the actuating rod being configured to extend out of the guiding hole to actuate the second switch terminal, and a second end of the actuating rod being connected to the sealing device; and an elastic resetting member disposed in the guiding hole, and the elastic resetting member being configured to constantly push the actuating rod in a direction running away from the second switch terminal.

The overpressure protection switch according to the present disclosure has a simple structure and a low cost. When the overpressure protection switch is applied to the pressure appliance such as an electric pressure cooker, by providing the actuating device and the holding device, if a pressure within the pressure appliance such as the electric pressure cooker reaches the predetermined pressure, the first contact and the second contact are disconnected, such that a heating circuit having the first switch terminal and the second switch terminal for the pressure appliance such as the electric pressure cooker can be broken, thus effectively achieving a power-off protection in case of an abnormal overpressure. Furthermore, when the second contact is in the disconnected position, the second contact can be held in the disconnected position, and a case that the heating device continues heating will not occur, thereby enhancing the use safety of the pressure appliance such as the electric pressure cooker.

According to one example of the present disclosure, the second switch terminal defines a first opening between the first end and the second end thereof, and the first opening runs through the second switch terminal, the holding device includes: a first triggering member connected to a side wall of the first opening adjacent to the first end of the second switch terminal; and an elastic retainer connected to a free end of the first triggering member, and connected to a side wall of the first opening adjacent to the second end of the second switch terminal.

According to one example of the present disclosure, the first triggering member is an elastic piece, when the second contact is in the contact position, the first triggering member and the elastic retainer are located at a side of the second switch terminal adjacent to the actuating device, when the second contact is in the disconnected position, the first triggering member and the elastic retainer are located at a side of the second switch terminal away from the actuating device, and the elastic retainer is a compression spring.

According to one example of the present disclosure, the second switch terminal defines a second opening between the first end and the second end thereof, and the second opening runs through the second switch terminal, the holding device includes: a second triggering member connected to a side wall of the second opening adjacent to the first end of the second switch terminal, the triggering member being configured as a convex surface that protrudes towards the actuating device when the second contact is in the contact position, and configured as a convex surface that protrudes away from the actuating device when the second contact is in the disconnected position; and a retainer connected to a free end of the second triggering member, and connected to a side wall of the opening adjacent to the second end of the second switch terminal.

According to one example of the present disclosure, the second switch terminal is formed as a convex surface that protrudes towards the actuating device when the second contact is in the contact position, and formed as a convex surface that protrudes away from the actuating device when the second contact is in the disconnected position.

According to one example of the present disclosure, the second switch terminal defines a third opening between the first end and the second end thereof, the third opening runs through the second switch terminal, a side wall of the third opening adjacent to the first end of the second switch terminal is provided with a tongue piece, and the actuating device is configured to actuate the tongue piece.

According to one example of the present disclosure, one of the actuating device and the switch body is provided with the holding device, and the other one of the actuating device and the switch body defines a first locking groove, when the second contact is in the disconnected position, the holding device is fitted with the first locking groove to lock the actuating device so as to hold the second contact in the disconnected position.

According to one example of the present disclosure, the one of the actuating device and the switch body defines a containing groove, the holding device includes a locking member disposed in the containing groove; and an elastic member disposed between an inner wall of the containing groove and the locking member, and the elastic member being configured to constantly push the locking member in a direction running away from the one of the actuating device and the switch body.

According to one example of the present disclosure, the actuating device defines a second locking groove, the holding device is a locking torsion spring, a first end of the locking torsion spring is a fixed end, a second end of the locking torsion spring is a movable end, and the second end of the locking torsion spring is configured to be fitted in the second locking groove to hold the second contact in the disconnected position.

According to one example of the present disclosure, the sealing device is a sealing piece, when the second contact is in the contact position, the sealing device protrudes towards the communicating opening to block off the communicating opening, when the second contact is in the disconnected position, the sealing device protrudes in a direction running away from the communicating opening to push the actuating device.

According to one example of the present disclosure, a pressure stress area of the environmental pressure on the sealing device is denoted as S, and S satisfies: $1mm^2 \geq S \geq 100mm^2$.

According to one example of the present disclosure, the predetermined pressure is denoted as P, and P satisfies: $140kPa \geq P \geq 200kPa$.

The pressure appliance according to a second aspect of the present disclosure includes: an appliance body; and the overpressure protection switch according to the first aspect of the present disclosure, the overpressure protection switch being disposed to a top of the appliance body, in which the environmental pressure is a pressure within the appliance body, and when the pressure within the appliance body reaches the predetermined pressure, the sealing device drives the actuating device to actuate the second switch terminal.

According to one example of the present disclosure, when the pressure within the appliance body reaches the predetermined pressure, the sealing device drives the actuating device to move upwards, horizontally or downwards so as to actuate the second switch terminal.

According to one example of the present disclosure, the pressure appliance is an electric pressure cooker or an electric pressure pot.

Additional aspects and advantages of embodiments of present disclosure will be given in part in the following descriptions, become apparent in part from the following descriptions, or be learned from the practice of the embodiments of the present disclosure.

## BRIEF DESCRIPTION OF THE DRAWINGS

These and other aspects and advantages of embodiments of the present disclosure will become apparent and more readily appreciated from the following descriptions made with reference to the drawings, in which:

Fig. 1 is a sectional view of an overpressure protection switch according to a first embodiment of the present disclosure, in which a second contact is in a contact position;

Fig. 2 is another sectional view of the overpressure protection switch illustrated in Fig. 1, in which the second contact is in a disconnected position;

Fig. 3 is a perspective view of the overpressure protection switch illustrated in Fig. 1, in which the second contact is in the contact position;

Fig. 4 is an assembly view of a first switch terminal and a second switch terminal illustrated in Fig. 3;

Fig. 5 is a sectional view of a pressure appliance employing the overpressure protection switch illustrated in Fig. 1;

Fig. 6 is a sectional view of an overpressure protection switch according to a second embodiment of the present disclosure, in which a second contact is in a contact position;

Fig. 7 is another sectional view of the overpressure protection switch illustrated in Fig. 6, in which the second contact is in a disconnected position;

Fig. 8 is a sectional view of an overpressure protection switch according to a third embodiment of the present disclosure, in which a second contact is in a contact position;

Fig. 9 is another sectional view of the overpressure protection switch illustrated in Fig. 8, in which the second contact is in a disconnected position;

Fig. 10 is a perspective view of a second switch terminal in Fig. 8;

Fig. 11 is a sectional view of an overpressure protection switch according to a fourth embodiment of the present disclosure, in which a second contact is in a contact position;

Fig. 12 is another sectional view of the overpressure protection switch illustrated in Fig. 11, in which the second contact is in a disconnected position;

Fig. 13 is a sectional view of an overpressure protection switch according to a fifth embodiment of the present disclosure, in which a second contact is in a contact position;

Fig. 14 is another sectional view of the overpressure protection switch illustrated in Fig. 13, in which the second contact is in a disconnected position;

Fig. 15 is a sectional view of an overpressure protection switch according to a sixth embodiment of the present disclosure, in which a second contact is in a contact position;

Fig. 16 is a top view of the overpressure protection switch illustrated in Fig. 15;

Fig. 17 is another sectional view of the overpressure protection switch illustrated in Fig. 15, in which the second contact is in a disconnected position;

Fig. 18 is a top view of the overpressure protection switch illustrated in Fig. 17;

Fig. 19 is another sectional view of a pressure appliance according to an embodiment of the present disclosure;

Fig. 20 is still another sectional view of a pressure appliance according to an embodiment of the present disclosure.

Reference numerals:

100: overpressure protection switch;
1: first switch terminal; 11: first contact;
2: second switch terminal; 21: second contact;
22: first opening; 22': second opening; 22": third opening;
23: tongue piece; 24: buffer opening;
3: holding device; 31: first triggering member; 32: elastic retainer
31': second triggering member; 32': retainer;
33: locking member; 34: elastic member; 35: locking torsion spring; 351: second end;
41: fixing seat; 411: guiding hole; 42: actuating rod;
421: first locking groove; 421': second locking groove;
422: stopping rib; 43: elastic resetting member;
5: switch body; 51: communicating opening; 52: containing groove; 6: sealing device; 7: wire;
200: pressure appliance;
201: cooker body; 202: cover; 203: seal member.

## DETAILED DESCRIPTION

Embodiments of the present disclosure will be described in detail and examples of the embodiments will be illustrated in the drawings, where same or similar reference numerals are used to indicate same or similar members or members with same or similar functions. The embodiments described herein with reference to drawings are explanatory, illustrative, and used to generally understand the present disclosure. The embodiments shall not be construed to limit the present disclosure.

In the specification, unless specified or limited otherwise, relative terms such as "central", "front", "rear", "right", "left", "lower", "upper", "horizontal", "vertical", "up", "top", "bottom", "inner", "outer", "axial", "radial", "circumferential" as well as derivative thereof (e.g., "horizontally", "downwardly", "upwardly", etc.) should be construed to refer to the orientation as then described or as shown in the drawings under discussion. These relative terms are for convenience of description and do not require that the present disclosure be constructed or operated in a particular orientation.

It should be noted that, terms such as "first", "second", "third", "fourth" and "fifth" are used herein for purposes of description and are not intended to indicate or imply relative importance or significance or to imply the number of indicated technical features. Thus, features limited by "first", "second", "third", "fourth" and "fifth" are intended to indicate or imply including one or more than one these features. Further, in the description of the present disclosure, "a plurality of" means two or more than two, unless specified otherwise.

In the description of the present disclosure, unless specified or limited otherwise, it should be noted that, terms "mounted," "connected" and "coupled" may be understood broadly, such as permanent connection or detachable connection, electronic connection or mechanical connection, direct connection or indirect connection via intermediary, inner communication or interreaction between two elements. These having ordinary skills in the art should understand the specific meanings in the present disclosure according to specific situations.

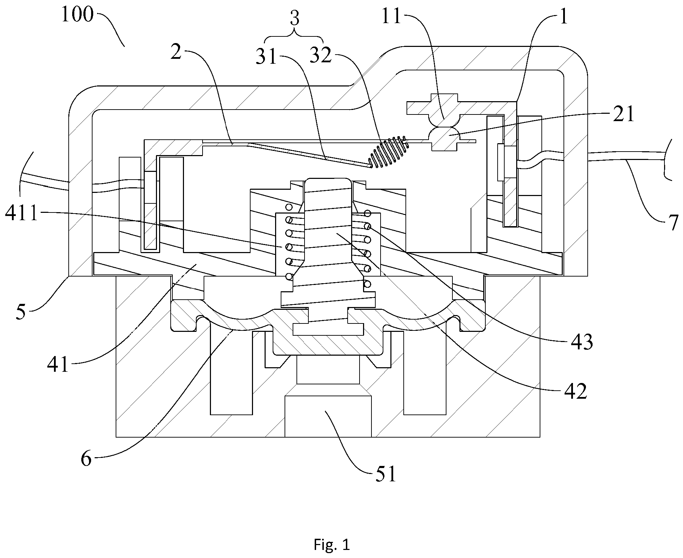

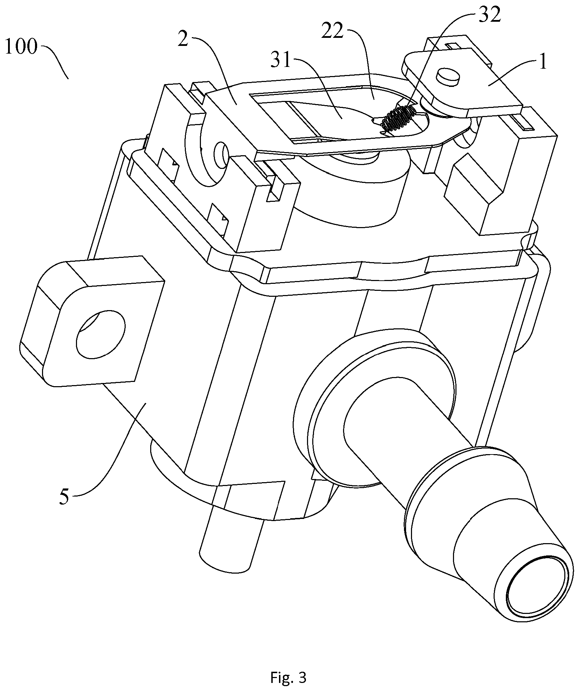

An overpressure protection switch 100 according to embodiments of the present disclosure will be described in the following with reference to Figs. 1 to 20. The overpressure protection switch 100 may be applied to a pressure appliance that requires a pressure power-off protection, such as an electric pressure cooker, particularly a rigid pressure cooker (that is, during a whole operation process of the electric pressure cooker, a cooker body 201 and a cover 202 are kept in a completely sealed state all the time).

When a normal pressure relief device for the pressure appliance 200 (such as the electric pressure cooker), such as a relief valve, or the like, is failed to cause an abnormal overpressure (that is, a pressure within the pressure appliance 200 is greater than a normal pressure application range, e.g. 70kPa), the overpressure protection switch 100 can cut off a heating device within the pressure appliance 200 to make the heating device stop heating, to prevent the pressure within the pressure appliance 200 from further increasing, and to ensure use safety of the pressure appliance 200.

In following descriptions of the present disclosure, the overpressure protection switch 100 applied to the electric pressure cooker is taken as an example for illustrations. Certainly, it can be understood by those skilled in the art that, the overpressure protection switch 100 may also be applied to other pressure appliances 200, such as an electric pressure pot, or the like.

As illustrated in Figs. 1 to 20, the overpressure protection switch 100 according to embodiments of a first aspect of the present disclosure includes a switch body 5, a first switch terminal 1, a second switch terminal 2, an actuating device, a sealing device 6 and a holding device 3.

The switch body 5 defines an accommodating chamber therein, and defines a communicating opening 51. The communicating opening 51 is in communication with the accommodating chamber before various components of the overpressure protection switch 100 mentioned above are assembled, and the accommodating chamber is isolated from the communicating opening 51 by the sealing device 6 after the overpressure protection switch 100 is assembled in place. The communicating opening 51 is in communication with an external environment. The "external environment" herein is defined relative to an interior of the switch body 5. For example, when the overpressure protection switch 100 is applied to the pressure appliance 200 (such as the electric pressure cooker), "the external environment" refers to an interior of the pressure appliance 200 (such as the electric pressure cooker).

The first switch terminal 1, the second switch terminal 2, the actuating device, the sealing device 6 and the holding device 3 are all disposed in the switch body 5. Thus, by providing the switch body 5 capable of accommodating the first switch terminal 1, the second switch terminal 2, the actuating device, the sealing device 6 and the holding device 3, integration of the overpressure protection switch 100 can be improved.

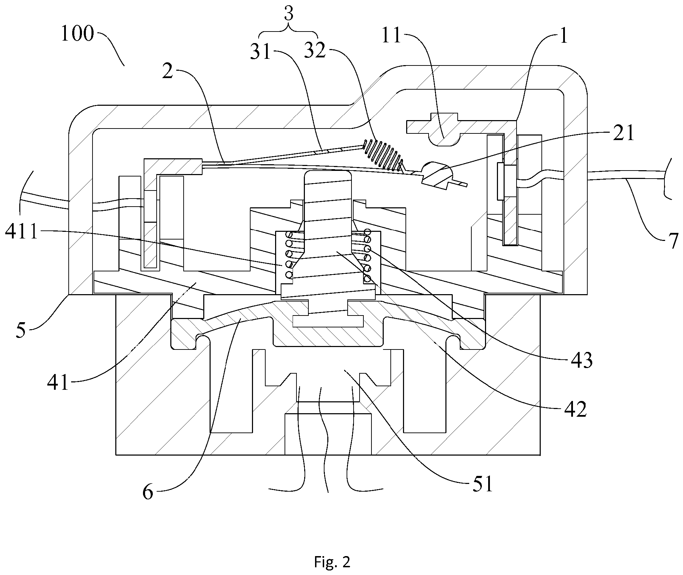

The first switch terminal 1 and the second switch terminal 2 are both disposed in the accommodating chamber of the switch body 5, and the first switch terminal 1 has a first contact 11. A first end of the second switch terminal 2 (for example, a left end illustrated in Figs. 1 and 2) is a fixed end, in which case the first end of the second switch terminal 2 is fixed, and has no relative movement with respective to the switch body 5. A second end of the second switch terminal 2 (for example, a right end illustrated in Figs. 1 and 2) is a movable end, that is, the second end of the second switch terminal 2 is capable of moving. The second end of the second switch terminal 2 has a second contact 21, and the second contact 21 is normally in contact with the first contact 11, that is, the first contact 11 and the second contact 21 are kept in contact with each other in a normal state. Thus, the second end of the second switch terminal 2 can drive the second contact 21 to move, such that the second contact 21 can have a contact with the first contact 11, or can be separated from the first contact 11 (that is, the second contact 21 is not in contact with the first contact 11).

The first switch terminal 1 and the second switch terminal 2 are adapted to be connected in a heating circuit (not illustrated) of the pressure appliance 200 such as the electric pressure cooker, and the heating circuit includes the heating device. When the pressure appliance 200 such as the electric pressure cooker is in a normal operation, the first contact 11 and the second contact 21 are kept in contact all the time, the heating circuit is constantly conducted, and the heating device is in operation, so as to heat food or the like within the pressure appliance 200.

When an abnormal overpressure occurs in the pressure appliance 200 such as the electric pressure cooker, the overpressure protection switch 100 performs an action, the second end of the second switch terminal 2 moves in a direction running away from the first contact 11 to separate the second contact 21 from the first contact 11, such that the heating circuit is broken to stop continuing heating the pressure appliance 200 such as the electric pressure cooker, and thus the pressure within the pressure appliance 200 such as the electric pressure cooker can be reduced gradually, thereby achieving protection for the pressure appliance 200 such as the electric pressure cooker, and ensuring the use safety of the pressure appliance 200 such as the electric pressure cooker. Furthermore, a user will not be injured, because the pressure appliance 200 such as the electric pressure cooker does not exhaust gas with a high temperature and a high pressure.

Optionally, the first contact 11 may be a protrusion protruding from a surface of the first switch terminal 1, and the second contact 21 may another protrusion protruding from a surface of the second switch terminal 2. An outer surface of the first contact 11 can be constituted by an arc surface and a flat surface together, and the flat surface is located at a top of the first contact 11. An outer surface of the first contact 11 can be constituted by an arc surface and a flat surface together, and the flat surface is located at a top of the second contact 21. Thus, the contact between the first contact 11 and the second contact 21 is a surface contact, which has a large contact area and makes the first contact 11 and the second contact 21 in good contact, thereby ensuring reliability of the heating circuit. Certainly, the respective outer surfaces of the first contact 11 and the second contact 21 may also be formed as spherical surfaces protruding outwards (not illustrated).

The actuating device is disposed between the second switch terminal 2 and the communicating opening 51, and the actuating device is disposed adjacent to the second switch terminal 2. The sealing device 6 is disposed at the communicating opening 51 to isolate the interior of the switch body 5 from the communicating opening 51, in which case the accommodating chamber in the switch body 5 is substantially a sealed space, and the sealing device 6 is connected to the actuating device. The sealing device 6 is used to isolate the interior of the switch body 5 from the external environment, such as the interior of the pressure appliance 200, and when the external environment pressure (for example, the pressure within the pressure appliance 200 such as the electric pressure cooker) reaches a predetermined pressure, the sealing device 6 is also used to drive the actuating device to actuate the second switch terminal 2 so as to separate the second contact 21 from the first contact 11.

When the overpressure protection switch 100 is applied to the pressure appliance 200 such as the electric pressure cooker, the communicating opening 51 of the overpressure protection switch 100 is adapted to be communicated with the interior of the pressure appliance 200 such as the electric pressure cooker, the sealing device 6 can isolate the accommodating chamber of the switch body 5 from the interior of the pressure appliance 200 such as the electric pressure cooker, so as to form a pressure difference between the interior of the switch body 5 and the interior of the pressure appliance 200 such as the electric pressure cooker, such that when the pressure appliance 200 such as the electric pressure cooker has an abnormal overpressure therein, the sealing device 6 can push the actuating device under the action of the pressure difference, so as to disconnect the second contact 11 from the first contact 11.

The holding device 3 is disposed in the switch body 5. When the overpressure protection switch 100 performs an action, the holding device 3 is used to keep the second contact 21 in a state of being separated from the first contact 11, and will not make the second contact 21 kept in contact with the first contact 11 again. When an environmental pressure applied by the external environment through the communicating opening 51 reaches the predetermined pressure, the sealing device 6 drives the actuating device to actuate the second switch terminal 2 so as to make the second contact 21 move from a contact position where the second contact 21 is normally in contact with the first contact 11 (as illustrated in Fig. 1) to a disconnected position where the second contact 21 is separated from the first contact 11 (as illustrated in Fig. 2), and the holding device 3 makes the second contact 21 held in the disconnected position. For example, after a single use (the first contact 11 and the second contact 21 are disconnected), the overpressure protection switch 100 cannot reset by itself, that is, the first contact 11 will not come into contact with the second contact 21 again to conduct the heating circuit, thereby enhancing the use safety of the pressure appliance 200 such as the electric pressure cooker.

Optionally, the predetermined pressure mentioned above is denoted as P, and the predetermined pressure P satisfies: 140kPa≥P≥200kPa. A specific value of the predetermined pressure P can be set depending on tan actual type of the pressure appliance 200 such as the electric pressure cooker, such that actual requirements can be better satisfied.

Optionally, a pressure stress area of the environmental pressure mentioned above on the sealing device 6 is denoted as S, and the pressure stress area S satisfies: $1mm^2 \geq S \geq 100mm^2$. For example, when the overpressure protection switch 100 is applied to the pressure appliance 200 such as the electric pressure cooker, S represents the pressure stress area of the pressure within the appliance body on the sealing device 6.

The overpressure protection switch 100 according to embodiments of the present disclosure has a simple structure and a low cost. When the overpressure protection switch 100 is used for the pressure appliance 200 such as the electric pressure cooker, by providing the actuating device and the holding device 3, if the pressure within the pressure appliance 200 such as the electric pressure cooker reaches the predetermined pressure, the first contact 11 is disconnected from the second contact 21, such that the heating circuit having the first switch terminal 1 and the second switch terminal 2 for the pressure appliance 200 such as the electric pressure cooker can be broken, thus effectively achieving a power-off protection in case of an abnormal overpressure. Furthermore, when the second contact 21 is in the disconnected position, the second contact 21 can be held in the disconnected position, a case that the heating device continues heating will not occur, thereby enhancing the use safety of the pressure appliance 200 such as the electric pressure cooker.

Additionally, by providing the switch body 5, the first switch terminal 1, the second switch terminal 2, the actuating device, the sealing device 6 and the holding device 3 can be integrated in the switch body 5, such that the overpressure protection switch 100 is a single integral component, and the overpressure protection switch 100 can be mounted to the pressure appliance 200 such as the electric pressure cooker conveniently and rapidly, when required to be used, thus improving assembly efficiency. Furthermore, by providing the sealing device 6, reliability of the action of the overpressure protection switch 100 can be effectively ensured.

The overpressure protection switch 100 according to a plurality of embodiments of the present disclosure will be described in the following with reference to Figs. 1-4 and 6-18.

Embodiment 1

As illustrated in Figs. 1 to 4, the overpressure protection switch 100 includes the switch body 5, as well as the first switch terminal 1, the second switch terminal 2, the actuating device, the sealing device 6 and the holding device 3 that are disposed in the switch body 5.

Specifically, as illustrated in Figs. 1 and 2, the switch body 5 has a substantially cuboid shape, the communicating opening 51 is defined in a bottom of the switch body 5, the switch body 5 is provided with a fixing seat 41 therein, and the first switch terminal 1 and the second switch terminal 2 are fixed to the fixing seat 41. Specifically, the first end of the first switch terminal 1 and the first end of the second switch terminal 2 are both fixed to the fixing seat 41, the second end of the first switch terminal 1 and the second end of the second switch terminal 2 are disposed in an up-and-down direction, the first contact 11 is provided to the second end of the first switch terminal 1 and the second contact 21 is provided to the second end of the second switch terminal 2, and the first contact 11 and the second contact 21 right face each other in the up-and-down direction.

The second switch terminal 2 has a first opening 22 between the first end and the second end thereof, and the first opening 22 running through the second switch terminal 2. For example, as illustrated in Figs. 1 to 4, the first opening 22 passes through the second switch terminal 2 in a thickness direction of the second switch terminal 2. It may be understood that, a specific size, a shape, or the like of the first opening 22 can be specifically set according to actual requirements, so as to better satisfy the actual requirements.

As illustrated in Figs. 1 to 4, the holding device 3 includes a first triggering member 31 and an elastic retainer 32. The first triggering member 31 is connected to a side wall (for example, a left side wall illustrated in Figs. 1 to 4) of the first opening 22 adjacent to the first end of the second switch terminal 2, this side wall is preferably formed to have a linear shape, so as to ensure reliability of the connection between the first triggering member 31 and this side wall. Meanwhile, rest parts of the first triggering member 31 are spaced apart from rest side walls of the first opening 22, in which case the first triggering member 31 is equivalent to a cantilever beam, and a free end of the first triggering member 31 (for example, a right end illustrated in Figs. 1 to 4) is capable of swinging relative to the other end (for example, a left end illustrated in Figs. 1 to 4) of the first triggering member 31 opposite the free end.

The elastic retainer 32 is connected between the free end of the first triggering member 31 and a side wall of the first opening 22 adjacent to the second end (for example, a right side wall illustrated in Figs. 1 to 4) of the second switch terminal 2. When the pressure within the pressure appliance 200 such as the electric pressure cooker reaches the predetermined pressure, the actuating device actuates the first triggering member 31 to make the elastic retainer 32 constantly pull the second end of the second switch terminal 2 in a direction running away from the second contact 21, such that the second contact 21 moves from the contact position where the second contact 21 is normally in contact with the first contact 11 (as illustrated in Fig. 1) to the disconnected position where the second contact 21 is separated from the first contact 11 (as illustrated in Fig. 2), and the second contact 21 is held in the disconnected position.

Optionally, the elastic retainer 32 is a compression spring. For example, as illustrated in Figs. 1 to 4, the elastic retainer 32 may be a variable-diameter coil spring having two ends with small cross-sectional areas and a middle portion with a large cross-sectional area. However, the present disclosure is not limited to this.

Thus, as illustrated in Fig. 1, when the second contact 21 is in the contact position, the first triggering member 31 and the elastic retainer 32 are located at a side (for example, a lower side illustrated in Fig. 1) of the second switch terminal 2 adjacent to the actuating device. Since the compression spring is constantly in a compressed state, an outer edge of said second end of the second switch terminal 2 is constantly raised upwards under the action of a tension of the compression spring, such that the first contact 11 and the second contact 21 can come into good contact.

When the second contact 21 is in the disconnected position, the first triggering member 31 and the elastic retainer 32 are located at a side of the second switch terminal 2 away from the actuating device. Specifically, the first triggering member 31 and the compression spring move from a position illustrated in Fig. 1 to an upper side of the second switch terminal 2, as illustrated in Fig. 2. Since the compression spring is constantly in the compressed state, the outer edge of said second end of the second switch terminal 2 is constantly lowered downwards under the action of the tension of the compression spring, such that the second contact 21 can be separated from the first contact 11, and the second contact 21 will not come into contact with the first contact 11 again. The actuating device will not touch the first triggering member 31 after actuating the first triggering member 31, and then the second switch terminal 2 keeps the second contact 21 in the disconnected position under the action of the holding device 3.

Optionally, the first triggering member 31 is an elastic piece, in which case the first triggering member 31 is formed as a planar structure, which thus provides a simple manufacturing process and a low cost, but is not limited to this.

Further, the fixing seat 41 defines a guiding hole 411 that runs through the fixing seat 41 in the up-and-down direction. As illustrated in Figs. 1 and 2, the guiding hole 411 may right face the communicating opening 51 in the up-and-down direction, the actuating device includes an actuating rod capable of moving in the up-and-down direction, and the actuating rod 42 passes through the guiding hole 411 and is disposed therein. A first end of the actuating rod 42 (for example, an upper end illustrated in Figs. 1 and 2) is adapted to extend out of the guiding hole 411 to actuate the second switch terminal 2, specifically to actuate the first triggering member 31. The guiding hole 411 has a function of guiding the actuating rod 42 to ensure accuracy of a movement of the actuating rod 42.

Optionally, an extending direction of the actuating rod 42 is perpendicular to a plane where the second switch terminal 2 is located. Thus, the first triggering member 31 can be better actuated to separate the second contact 21 from the first contact 11.

As illustrated in Figs. 1 and 2, the guiding hole 411 is provided with an elastic resetting member 43 therein, and the elastic resetting member 43 is configured to constantly push the actuating rod 42 in a direction running away from the second switch terminal 2. For example, the elastic resetting member 43 may be a spring. The spring is fitted over the actuating rod 42, and two ends of the spring respectively abut against a top wall of the guiding hole 411 and a stopping rib 422 disposed to a lower end of the actuating rod 42 and extending outwards, so as to constantly push the actuating rod 42 downwards. That is, when the pressure within the pressure appliance 200 such as the electric pressure cooker is less than the predetermined pressure, the actuating rod 42 can reset under the action of the spring. However, the first contact 11 and the second contact 21 will not come into contact all the time due to a holding effect of the holding device 3.

Optionally, the sealing device 6 is a sealing piece. When the second contact 21 is in the contact position, the sealing device 6 protrudes towards the communicating opening 51 to block off the communicating opening 51. For example, as illustrated in Fig. 1, an edge of the sealing piece and a bottom thereof for blocking off the communicating opening 51 have a double sealing function, thereby effectively ensuring the reliability of the action of the actuating device. When the second contact 21 is in the disconnected position, the sealing device 6 protrudes in a direction running away from the communicating opening 51 to push the actuating device, as illustrated in Fig. 2. In this case, the sealing device 6 is preferably made of materials having elasticity, thereby further improving a sealing effect of the sealing device 6.

The overpressure protection switch 100 according to embodiments of the present disclosure may cut off the power source when the pressure within the pressure appliance 200 such as the electric pressure cooker is between 140kPa and 200kPa, thereby achieving the overpressure protection. A principle of this kind of overpressure protection switch 100 is explained as follows. Steam within the pressure appliance 200 such as the electric pressure cooker enters the switch body 55 through the communicating opening 51. When the steam pressure is greater than an elastic force of the elastic resetting member 43 such as a spring, the steam jacks the sealing device 6 up to drive the actuating rod 42 to move so as to actuate the first triggering member 31, and the first triggering member 31 will prop upwards after being stressed, such that the second contact 21 of the second switch terminal 2 moves downwards along with the first triggering member 31, and the first contact 11 is separated from the second contact 21 in the switch body 5. Furthermore, after the first triggering member 31 is actuated, the elastic retainer 32 such as the compression spring pulls the second switch terminal 2 to prevent the second contact 21 from returning, thereby effectively enhancing the pressure protection, improving the safety of the pressure appliance 200 such as the electric pressure cooker, and providing more safety and reliability in comparison to a conventional mechanical pressure relief structure.

Embodiment 2

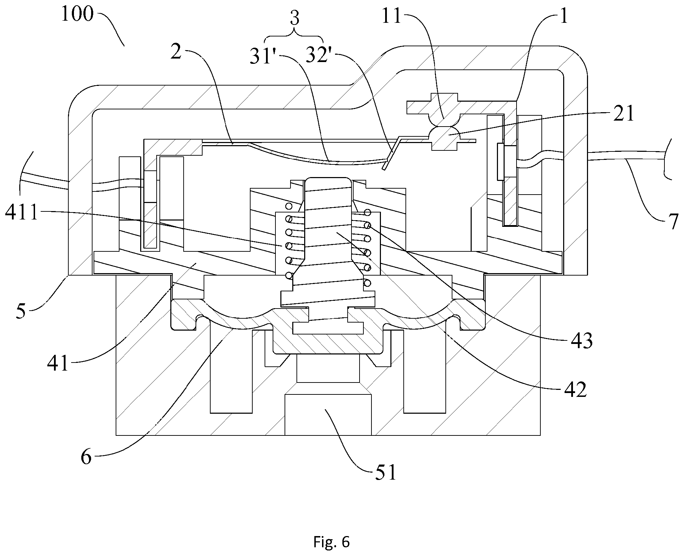

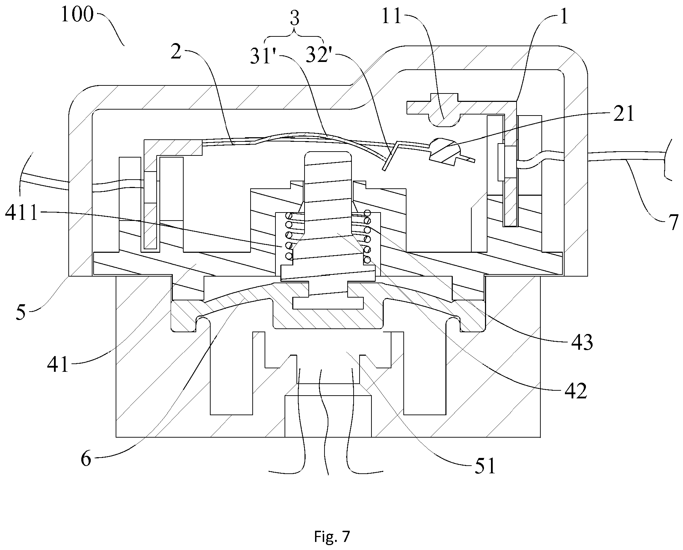

As illustrated in Figs. 6 and 7, the structure of the present embodiment is substantially identical to that of embodiment 1, in which the same component is denoted as the same reference numeral, and the difference therebetween only lies in that the structures of the holding devices 3 are different.

In the present embodiment, the second switch terminal 2 has a second opening 22' between the first end and the second end thereof, and the second opening 22' runs through the second switch terminal 2. Referring to Figs. 6 and 7, the holding device 3 includes a second triggering member 31' and a retainer 32'. The second triggering member 31' is connected to a side wall (for example, a left side wall illustrated in Figs. 6 and 7) of the second opening 22' adjacent to the first end of the second switch terminal 2, this side wall is preferably formed to have a linear shape, to ensure reliability of the connection between the second triggering member 31' and this side wall. Rest parts of the second triggering member 31' are spaced apart from rest side walls of the opening 22.

The second triggering member 31' is configured as a convex surface (as illustrated in Fig. 6) protruding towards the actuating device when the second contact 21 is in the contact position, in which case the first contact 11 is located at a side of the second switch terminal 2 away from the actuating device, and the said second end of the second switch terminal 2 is bent towards the first contact 11, thereby effectively ensuring a tight contact between the second contact 21 and the first contact 11. Furthermore, the second triggering member 31' is formed as a convex surface (as illustrated in Fig. 7) protruding away from the actuating device when the second contact 21 is in the disconnected position, in which case the second switch terminal 2 protrudes in a direction running away from the actuating device under the action of the actuating device, such that the said second end of the second switch terminal 2 can be driven to move in a direction running away from the first contact 11, so as to separate the second contact 21 from the first contact 11.

It should be noted herein that, the second triggering member 31' can be held in the state of protruding away from the actuating device due to its own stress constrain, in which case the second contact 21 is separated from the first contact 11 and will not reset. Thus, by processing the second triggering member 31' into a curved surface that is bent towards one side thereof, when a force is applied to the bent side of the second triggering member 31', the second triggering member 31' can protrude towards the other side thereof under the action of this force, and drive the said second end of the second switch terminal 2 to move in the up-and-down direction, so as to achieve contact and separation with the first contact 11.

The retainer 32' is connected to a free end of the second triggering member 31' and a side wall (for example, a right side wall illustrated in Figs. 6 and 7) of the opening adjacent to the second end of the second switch terminal 2. When the actuating device actuates the second triggering member 31', the second triggering member 31' drives the second contact 21 to be separated from the first contact 11 by the retainer 32', as illustrated in Fig. 7.

Optionally, the retainer 32' can be configured to obliquely extend from a side of the second switch terminal 2 adjacent to the actuating device to a side of the second switch terminal 2 adjacent to the first contact 11 (for example, in a direction from bottom to top illustrated in Figs. 6 and 7), and in a direction approaching the first contact 11 (for example, a rightward direction illustrated in Figs. 6 and 7). For example, as illustrated in Figs. 6 and 7, an end (for example, an upper end illustrated in Figs. 6 and 7) of the retainer 32' is connected to a side wall of the second opening 22' adjacent to the second end of the second switch terminal 2, and the other end (for example, a lower end illustrated in Figs. 6 and 7) of the retainer 32' obliquely extends downwards in a direction towards the actuating device. Certainly, it should be understood that, the said other end of the retainer 32' may also obliquely extend upwards in a direction towards the first contact 11 (not illustrated). Thus, when the second contact 21 is in the disconnected position, the bent second triggering member is held in such bent position, and drives the retainer 32' to keep the second contact 21 separated from the first contact 11 all the time without being contact with each other again.

The retainer 32' may define an inserting groove, the said free end of the second triggering member 31' can extend into the inserting groove, such that the second triggering member can drive the second contact 21 of the second switch terminal 2 to be separated from or come into contact with the first contact 11 when the second triggering member has an action. Certainly, the present disclosure is not limited to this, and the said free end of the second triggering member 31' may also be fixedly connected to the retainer 32'.

The structures of the first switch terminal 1, the second switch terminal 2, the actuating device and the sealing device 6 of the overpressure protection switch 100 in the present embodiment is similar to those in embodiment 1, which thus will not be described in detail herein.

The overpressure protection switch 100 according to embodiments of the present disclosure may cut off the power source when the pressure within the pressure appliance 200 such as the electric pressure cooker is between 140kPa and 200kPa, thereby achieving the overpressure protection. The principle of this kind of overpressure protection switch 100 is explained as follows. Steam within the pressure appliance 200 such as the electric pressure cooker enters the switch body 5 through the communicating opening 51. When the steam pressure is greater than an elastic force of the elastic resetting member 43 such as a spring, the steam jacks the sealing device 6 up to drive the actuating rod 42 to move so as to actuate the second triggering member. The second triggering member will prop upwards after being stressed, such that the second contact 21 of the second switch terminal 2 moves downwards along with the second triggering member, and the first contact 11 is separated from the second contact 21 in the switch body 5. Furthermore, after the second triggering member is actuated, the retainer 32' can hold the second contact 21 in the disconnected position to prevent the second contact 21 from returning, thereby effectively enhancing the pressure protection, improving the safety of the pressure appliance 200 such as the electric pressure cooker, and providing more safety and reliability in comparison to the conventional mechanical pressure relief structure.

Embodiment 3

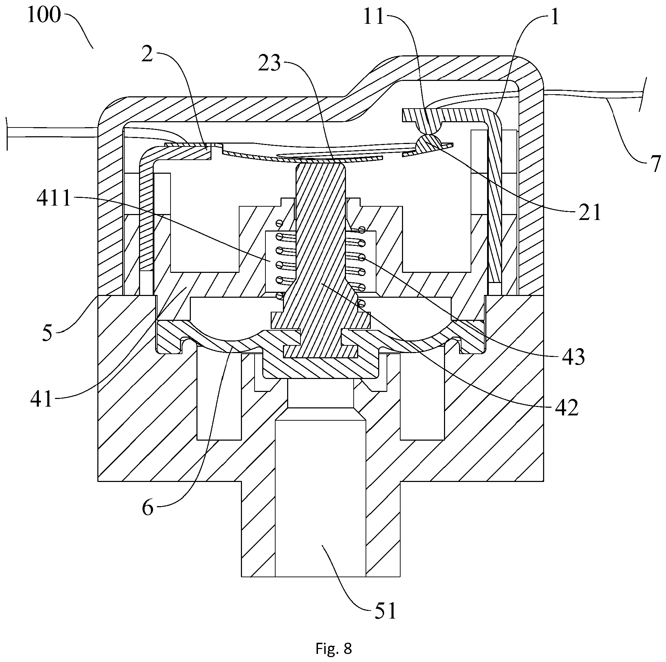

As illustrated in Figs. 8 to 10, the structure of the present embodiment is substantially identical to that of embodiment 1, in which the same component is denoted as the same reference numeral, and the difference only lies in that the structures of holding devices 3 are different.

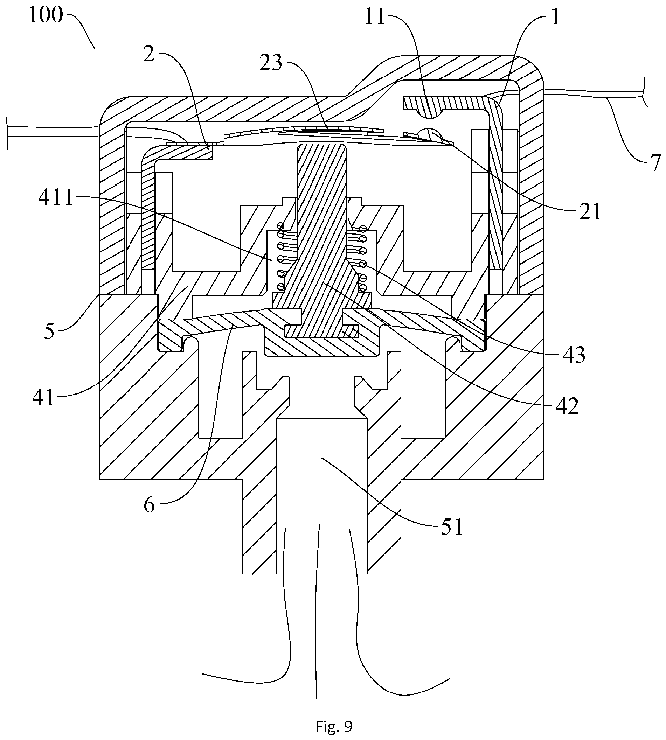

In the present embodiment, as illustrated in Figs. 8 and 9, the second switch terminal 2 is formed as a convex surface (as illustrated in Fig. 8) protruding towards the actuating device when the second contact 21 is in the contact position, in which case the first contact 11 is located at the side of the second switch terminal 2 away from the actuating device, and the said second end of the second switch terminal 2 is bent towards the first contact 11, thereby effectively ensuring the tight contact between the second contact 21 and the first contact 11.

The second switch terminal 2 is formed as a convex surface (as illustrated in Fig. 9) protruding away from the actuating device when the second contact 21 is in the disconnected position, in which case the second switch terminal 2 protrudes in a direction running away from the actuating device under the action of the actuating device, such that the said second end of the second switch terminal 2 can be driven to move in a direction running away from the first contact 11, so as to separate the second contact 21 from the first contact 11. Moreover, the second switch terminal 2 can be held in the state of protruding away from the actuating device due to its own stress constrain and will not reset. Thus, by processing the second switch terminal 2 into a curved surface that is bent towards one side thereof, when a force is applied to the bent side of the second switch terminal 2, the second switch terminal 2 can protrude towards the other side thereof under the action of this force, and drive the said second end of the second switch terminal 2 to move in the up-and-down direction, so as to achieve contact and separation with the first contact 11.

Optionally, a longitudinal section of the second switch terminal 2 has an arc shape. Certainly, the present disclosure is not limited to this, and the whole second switch terminal 2 may also substantially be a part of a sphere. It should be understood that, the specific shape of the second switch terminal 2 can be specifically provided depending on the actual requirements, as long as the second switch terminal 2 can be arched towards one side in a normal state to keep the first contact 11 in contact with the second contact 21, and can be arched towards the other side when an abnormal pressure occurs, so as to separate the first contact 11 from the second contact 21.

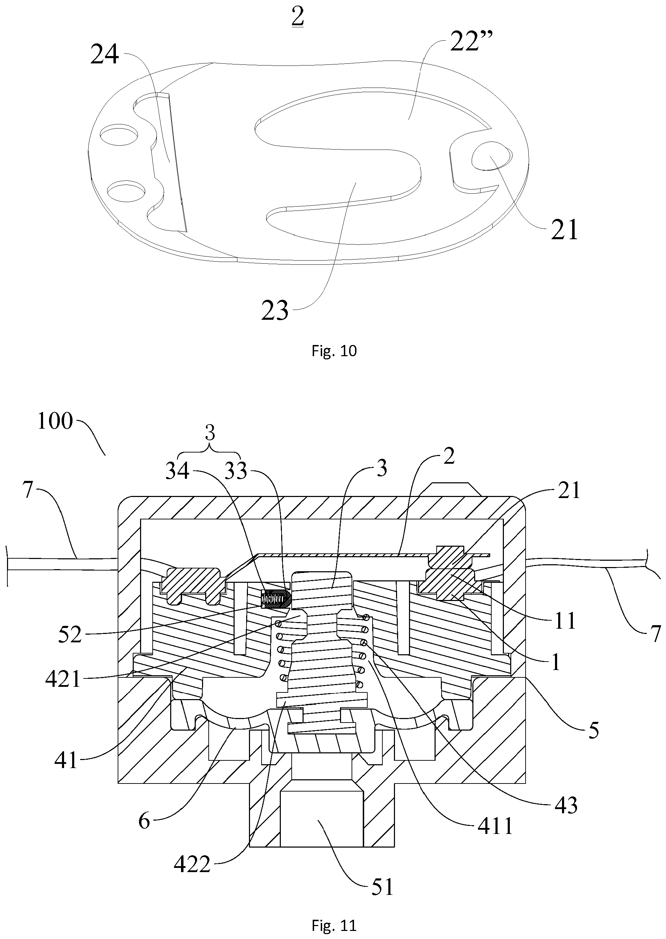

As illustrated in Fig. 10, the second switch terminal 2 has a third opening 22" between the first end and the second end thereof, and the third opening 22" runs through the second switch terminal 2. The third opening 22" passes through the second switch terminal 2 in the thickness direction of the second switch terminal 2. A side wall (for example, a left side wall illustrated in Fig. 10) of the third opening 22" adjacent to the first end of the second switch terminal 2 is connected with a tongue piece 23, and another end (for example, a right end illustrated in Fig. 10) of the tongue piece 23 and the side wall of the third opening 22" are spaced apart from each other. The actuating device is adapted to actuate the tongue piece 23 to achieve the contact and the separation between the second contact 21 and the first contact 11. Thus, the actuating device just needs to actuate the tongue piece 23 with a relatively small force to achieve the power-off protection, thereby further ensuring the use safety of the pressure appliance 200 such as the electric pressure cooker.

Optionally, a width of the tongue piece 23 is reduced gradually in a direction from the first end of the second switch terminal 2 to the second end of the second switch terminal 2 (for example, in a direction from left to right as illustrated in Figs. 8 to 10). Thus, the reliability of the power-off protection can be effectively ensured, and also materials for the second switch terminal 22 can be reduced to decrease the cost.

Further, as illustrated in Fig. 10, the second switch terminal 2 defines a buffer opening 24, the buffer opening 24 passes through the second switch terminal 2 in the thickness direction of the second switch terminal 2, and is disposed adjacent to the said first end of the second switch terminal 2. Thus, by providing the buffer opening 24 at the fixed end of the second switch terminal 2, it is possible to avoid a failure of the fixed end of the second switch terminal 2 due to multiple bends, thereby prolonging the service life of the second switch terminal 2, and improving the reliability of the overpressure protection switch 100.

The structures of the first switch terminal 1, the second switch terminal 2, the actuating device and the sealing device 6 of the overpressure protection switch 100 in the present embodiment is similar to those in embodiment 1, which thus will not be described in detail herein.

The overpressure protection switch 100 according to embodiments of the present disclosure may cut off of the power source when the pressure within the pressure appliance 200 such as the electric pressure cooker is between 140kPa and 200kPa, thereby achieving the overpressure protection. The principle of this kind of overpressure protection switch 100 is explained as follows. Steam within the pressure appliance 200 such as the electric pressure cooker enters the switch body 5 through the communicating opening 51. When the steam pressure is greater than an elastic force of the elastic resetting member 43 such as a spring, the steam jacks the sealing device 6 up to drive the actuating rod 42 to move so as to actuate the second switch terminal 2. The second switch terminal 2 is configured as an arc-shaped structure and will be arched upwards after being stressed, and the second contact 21 of the second switch terminal 2 moves downwards along with the second switch terminal 2, so as to separate the first contact 11 from the second contact 21 in the switch body 5. After the second switch terminal 2 is actuated, the second switch terminal 2 can be held in this state to prevent the second contact 21 from returning, thereby effectively enhancing the pressure protection, improving the safety of the pressure appliance 200 such as the electric pressure cooker, and providing more safety and reliability in comparison to the conventional mechanical pressure relief structure.

Embodiment 4

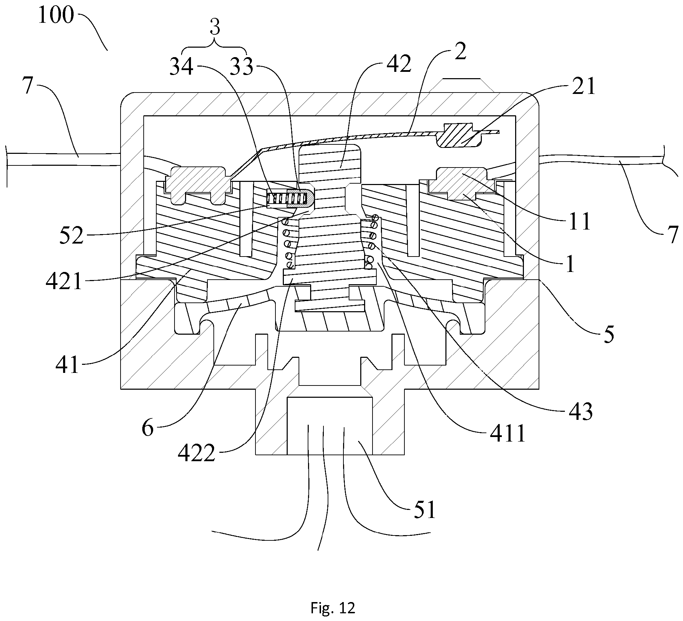

As illustrated in Figs. 11 and 12, the structure of the present embodiment is substantially identical to that of embodiment 1, in which the same component is denoted as the same reference numeral, and the difference only lies in that the structures of holding devices 3 are different.

Specifically, one of the actuating device and the switch body 5 is provided with the holding device 3, and the other of the actuating device and the switch body 5 defines a first locking groove 421. When the second contact 21 is in the disconnected position, the holding device 3 is fitted in the first locking groove 421 to lock the actuating device so as to hold the second contact 21 in the disconnected position. The one of the actuating device and the switch body 5 defines a containing groove 52, and the holding device 3 includes a locking member 33 and an elastic member 34. The locking member 33 is disposed in the containing groove 52, the elastic member 34 is disposed between an inner wall of the containing groove 52 and the locking member 33, and the elastic member 34 is configured to constantly push the locking member 33 in a direction running away from the one of the actuating device and the switch body 5.

The structures of the first switch terminal 1, the second switch terminal 2, the actuating device and the sealing device 6 of the overpressure protection switch 100 in the present embodiment is similar to those in embodiment 1, which thus will not be described in detail herein.

Specific to the present embodiment, as illustrated in Figs. 11 and 12, the actuating device includes an actuating rod 42 configured to actuate the second switch terminal 2, the actuating rod 42 is movable in the up-and-down direction relative to the second switch terminal 2, and the first locking groove 421 is formed in the actuating rod 42. Specifically, the first locking groove 421 is formed in an outer circumferential wall of the actuating rod 42, and the first locking groove 421 is formed as an annular groove extending annularly in a circumferential direction of the actuating rod 42.

The fixing seat 41 defines the containing groove 52 opening towards the actuating rod 42, the holding device 3 is movably disposed in the containing groove 52, and the holding device 3 is adapted to extend out of the containing groove 52 to be fitted in the first locking groove 421 so as to hold the second contact 21 in the disconnected position. Thus, by fitting the holding device 3 in the first locking groove 421, the actuating rod 42 can be held in a position where the actuating rod 42 touches and actuates the second switch terminal 2 (i.e. a position illustrated in Fig. 12), the second contact 21 can be kept in the state of being separated from the first contact 11, and thus a pressure fluctuation within the pressure appliance 200 such as the electric pressure cooker will not cause the second contact 21 to come into contact with the first contact 11 again.

Specifically, the locking member 33 and the elastic member 34 are both disposed in the containing groove 52, the elastic member 34 is arranged between the inner wall of the containing groove 52 (for example, a left side wall illustrated in Figs. 11 and 12) and the locking member 33, and the elastic member 34 is configured to constantly push the locking member 33 in a direction towards a central axis of the actuating rod 42. When the second contact 21 is in the contact position, as illustrated in Fig. 11, the locking member 33 keeps abutting against the outer circumferential wall of the actuating rod 42 under the action of the elastic member 34, in which case the first locking groove 421 is located below the holding device 3. In a process of the actuating rod 42 moving upwards, the first locking groove 421 moves upwards relative to the holding device 3. When the actuating rod 42 moves to a position where the containing groove 52 is substantially aligned with the first locking groove 421 in a left-and-right direction, the locking member 33 will extend into the first locking groove 421 under the action of the elastic member 34, in which case the second contact 21 is disconnected with the first contact 11, such that the heating circuit of the pressure appliance 200 such as the electric pressure cooker is cut off, and the pressure within the electric pressure cooker will not continue acting on the actuating rod 42, that is, the actuating rod 42 will not continue moving upwards, but can be held in this position due to the fitting between the locking member 33 and the first locking groove 421, so as to keep the second contact 21 and the first contact 11 in the disconnected state all the time, thereby effectively enhancing the pressure protection, and improving the safety of the pressure appliance 200 such as the electric pressure cooker. Optionally, the elastic member 34 is a spring, but not limited to this.

Further, an end of the locking member 33 facing away from the central axis of the actuating rod 42 defines a groove, and an end of the elastic member 34 is adapted to extend into the groove and be fixed to an inner wall of the groove, so as to reduce a space occupation of the whole holding device 3.

The overpressure protection switch 100 according to embodiments of the present disclosure may cut off of the power source when the pressure within the pressure appliance 200 such as the electric pressure cooker is between 140kPa and 200kPa, thereby achieving the overpressure protection. The principle of this kind of overpressure protection switch 100 is explained as follows. Steam within the pressure appliance 200 such as the electric pressure cooker enters the switch body 5 through the communicating opening 51. When the steam pressure is greater than the elastic force of the elastic resetting member 43 such as the spring, the steam jacks the sealing device 6 up to drive the actuating rod 42 to move so as to actuate the second switch terminal 2, and the second switch terminal 2 will prop upwards after being stressed, such that the second contact 21 of the second switch terminal 2 moves upwards along with the second switch terminal 2, so as to be separated from the first contact 11. With the actuating rod 42 moving upwards, when the actuating rod 42 rises to the position where the first locking groove 421 in the actuating rod 42 is substantially aligned with the containing groove 52 in the fixing seat 41, the locking member 33 is driven by the elastic member 34 to snap into the first locking groove 421, so as to lock the actuating rod 42, and thus the actuating rod 42 cannot reset. Since the actuating rod 42 cannot return, the second switch terminal 2 cannot return to the position where the second contact 21 is in contact with the first contact 11, thereby effectively enhancing the pressure protection, improving the safety of the pressure appliance 200 such as the electric pressure cooker, and providing more safety and reliability in comparison to the conventional mechanical pressure relief structure.

Embodiment 5

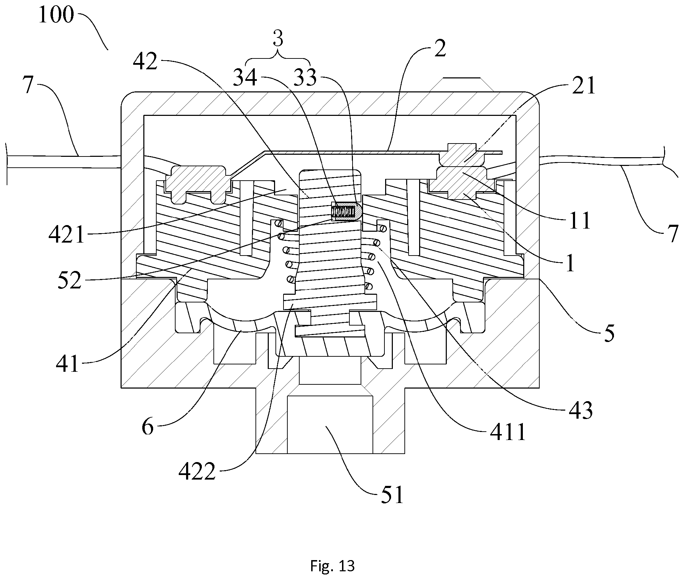

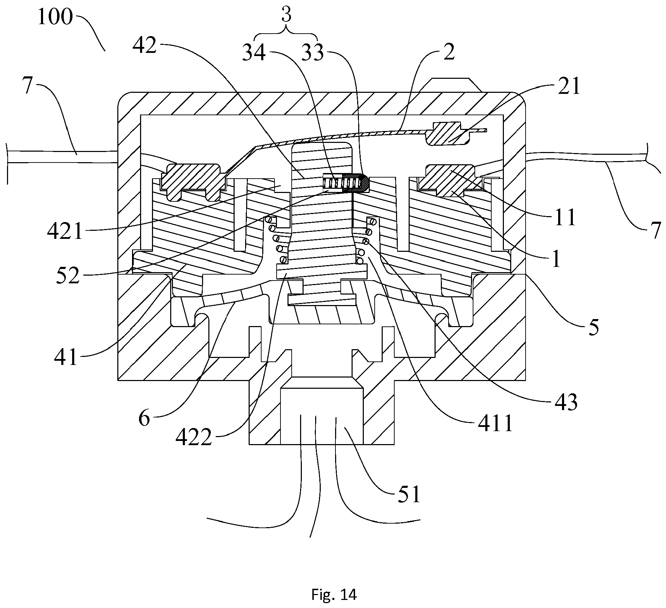

As illustrated in Figs. 13 and 14, the structure of the present embodiment is substantially identical to that of embodiment 4, in which the same component is denoted as the same reference numeral, and the difference only lies in that the structures of holding devices 3 are different.

In the present embodiment, as illustrated in Figs. 13 and 14, the fixing seat 41 is provided with the first locking groove 421, and the holding device 3 is adapted to be fitted with the first locking groove 421 to lock the actuating device so as to hold the second contact 21 in the disconnected position. Thus, when the actuating device acts, the holding device 3 may be fitted with the first locking groove 421 in the fixing seat 41, such that the actuating device can be locked at the position where the second contact 21 is disconnected from the first contact 11.

The actuating device includes an actuating rod 42 configured to actuate the second switch terminal 2. For example, as illustrated in Figs. 13 and 14, the actuating rod 42 is movable relative to the second switch terminal 2 in the up-and-down direction. When the actuating rod 42 is located in a position illustrated in Fig. 13, the second contact 21 keeps contact with the first contact 11 all the time. When the pressure in the pressure appliance 200 such as the electric pressure cooker is abnormal, the actuating rod 42 may be moved upwards and hence push the second switch terminal 2, so as to disconnect the second contact 21 from the first contact 11, thus achieving the power-off protection.

The actuating rod 42 defines a containing groove 52 opening towards the fixing seat 41, the holding device 3 is movably disposed in the containing groove 52, and the holding device 3 is adapted to extend out of the containing groove 52 to be fitted in the first locking groove 421, so as to hold the second contact 21 in the disconnected position. Thus, by fitting the holding device 3 in the first locking groove 421, the actuating rod 42 can be held in a position wherein the actuating rod 42 touches and actuates the second switch terminal 2 (i.e. a position illustrated in Fig. 14), the second contact 21 can be kept in the state of being separated from the first contact 11, and a pressure fluctuation within the pressure appliance 200 such as the electric pressure cooker will not cause the second contact 21 to come into contact with the first contact 11 again.

The locking member 33 and the elastic member 34 are both disposed in the containing groove 52, the elastic member 34 is disposed between an inner wall (for example, a left side wall illustrated in Figs. 13 and 14) of the containing groove 52 and the locking member 33, and the elastic member 34 is configured to constantly push the locking member 33 in a direction running away from a central axis of the actuating rod 42. When the second contact 21 is in the contact position, as illustrated in Fig. 13, the locking member 33 keeps abutting against the fixing seat 41 under the action of the elastic member 34, in which case the locking groove is located above the holding device 3. In a process of the actuating rod 42 moving upwards, the holding device 3 moves upwards relative to the locking groove. When the actuating rod 42 moves to a position wherein the containing groove 52 is substantially aligned with the locking groove in the left-and-right direction, the locking member 33 will extend into the locking groove under the action of the elastic member 34, in which case the second contact 21 is disconnected from the first contact 11, such that the heating circuit of the pressure appliance 200 such as the electric pressure cooker is cut off, and the pressure within the electric pressure cooker will not continue acting on the actuating rod 42, that is, the actuating rod 42 will not continue moving upwards, but can be held in this position due to the fitting between the locking member 33 and the locking groove, so as to keep the second contact 21 and the first contact 11 in the disconnected state all the time, thereby effectively enhancing the pressure protection, and improving the safety of the pressure appliance 200 such as the electric pressure cooker. Optionally, the elastic member 34 is a spring, but not limited to this.

Further, an end of the locking member 33 adjacent to the central axis of the actuating rod 42 defines a groove, and an end of the elastic member 34 is adapted to extend into the groove and be fixed to an inner wall of the groove, so as to reduce a space occupation of the whole holding device 3.

The structures of the first switch terminal 1, the second switch terminal 2, the actuating device and the sealing device 6 of the overpressure protection switch 100 in the present embodiment is similar to those in embodiment 4, which thus will not be described in detail herein.

The overpressure protection switch 100 according to embodiments of the present disclosure may cut off of the power source when the pressure within the pressure appliance 200 such as the electric pressure cooker is between 140kPa and 200kPa, thereby achieving the overpressure protection. The principle of this kind of overpressure protection switch 100 is explained as follows. Steam within the pressure appliance 200 such as the electric pressure cooker enters the switch body 5 through the communicating opening 51. When the steam pressure is greater than the elastic force of the elastic resetting member 43 such as the spring, the steam jacks the sealing device 6 up to drive the actuating rod 42 to move to so as to actuate the second switch terminal 2. The second switch terminal 2 will prop upwards after being stressed, such that the second contact 21 of the second switch terminal 2 moves upwards along with the second switch terminal 2, so as to separate the first contact 11 from the second contact 21. With the actuating rod 42 moving upwards, when the actuating rod 42 rises to the position where the containing groove 52 in the actuating rod 42 is substantially aligned with the locking groove in the fixing seat 41, the locking member 33 in the containing groove 52 is driven by the elastic member 34 to snap into the first locking groove 421 to lock the actuating rod 42, and thus the actuating rod 42 cannot reset. Since the actuating rod 42 cannot return, the second switch terminal 2 cannot return to the position where the second contact 21 is in contact with the first contact 11, thereby effectively enhancing the pressure protection, improving the safety of the pressure appliance 200 such as the electric pressure cooker, and providing more safety and reliability in comparison to the conventional mechanical pressure relief structure.

Embodiment 6

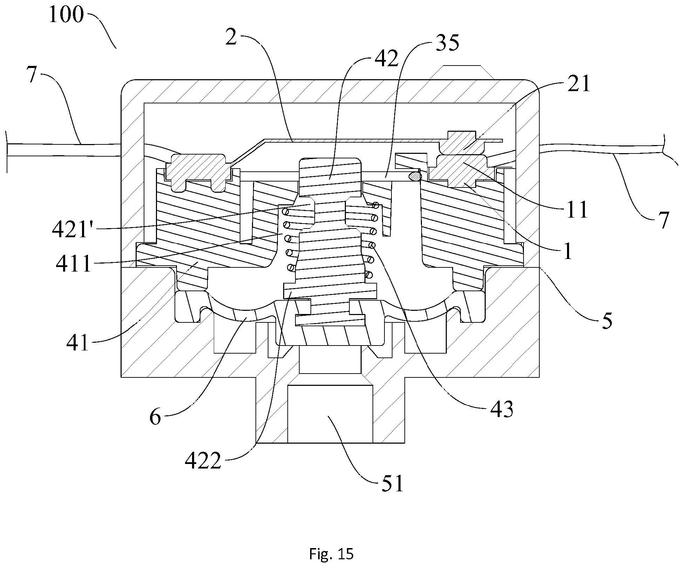

As illustrated in Figs. 15 to 18, the structure of the present embodiment is substantially identical to that of embodiment 4, in which the same component is denoted as the same reference numeral, and the difference only lies in that the structures of holding devices 3 are different.

In the present embodiment, as illustrated in Figs. 15 to 18, the actuating device defines a second locking groove 421' therein, and the holding device 3 is a locking torsion spring 35. A first end of the locking torsion spring 35 is a fixed end, that is, the said first end of the locking torsion spring 35 is immovable. A second end 351 of the locking torsion spring 35 is a movable end, that is, the said second end of the locking torsion spring 35 is movable, and the second end 351 of the locking torsion spring 35 is adapted to be fitted in the second locking groove 421' to hold the second contact 21 in the disconnected position.

Thus, by fitting the locking torsion spring 35 with the actuating rod 42, after a single use (the first contact 11 is disconnected from the second contact 21) of the overpressure protection switch 100, the overpressure protection switch 100 cannot reset by itself, that is, the first contact 11 will not come into contact with the second contact 21 again to conduct the heating circuit, thereby enhancing the use safety of the pressure appliance 200 such as the electric pressure cooker.

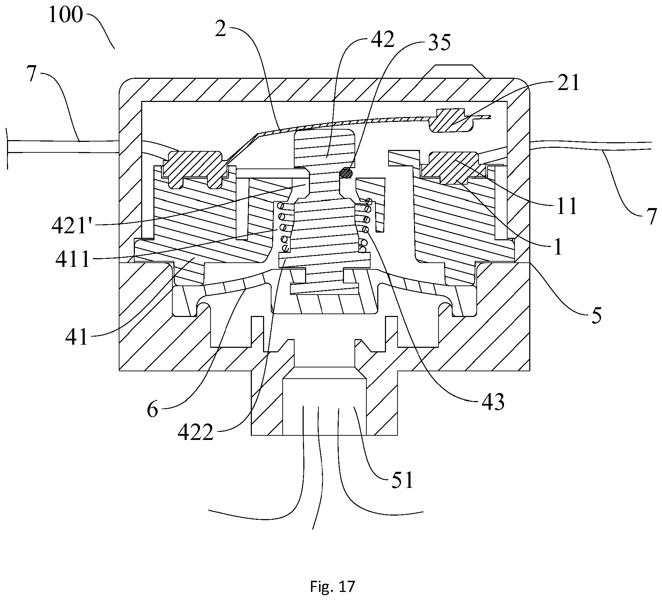

Specifically, the actuating device includes an actuating rod 42, and the actuating rod 42 is disposed adjacent to the second switch terminal 2. As illustrated in Figs. 15 and 17, the actuating rod 42 and the first switch terminal 1 are located at the same side (for example, a lower side illustrated in Figs. 15 and 17) of the second switch terminal 2. The actuating rod 42 is not in contact with the second switch terminal 2 in normal conditions (for example, the second contact 21 is in the contact position). The second locking groove 421' is formed in the actuating rod 42.

A first end (for example, an upper end illustrated in Figs. 15 and 17) of the actuating rod 42 is adapted to actuate the second switch terminal 2. For example, as illustrated in Figs. 15 and 17, the actuating rod 42 is movable relative to the second switch terminal 2 in the up-and-down direction. When the actuating rod 42 is located in a position illustrated in Fig. 15, the second contact 21 keeps contact with the first contact 11 all the time. When the pressure in the pressure appliance 200 such as the electric pressure cooker is abnormal, the actuating rod 42 may be moved upwards and hence push the second switch terminal 2, so as to disconnect the second contact 21 from the first contact 11, thus achieving the power-off protection.

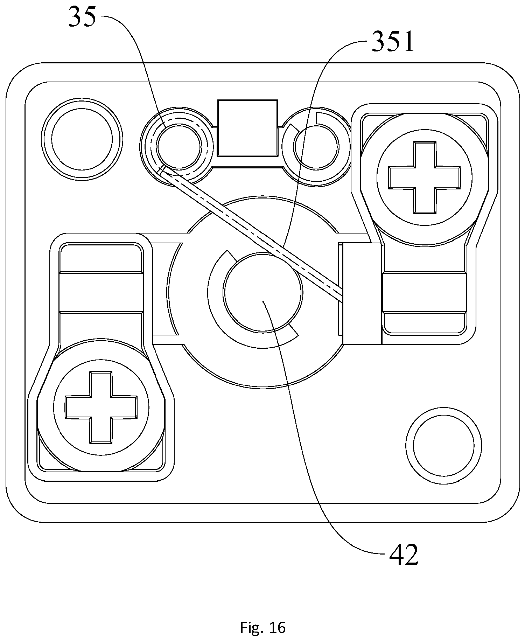

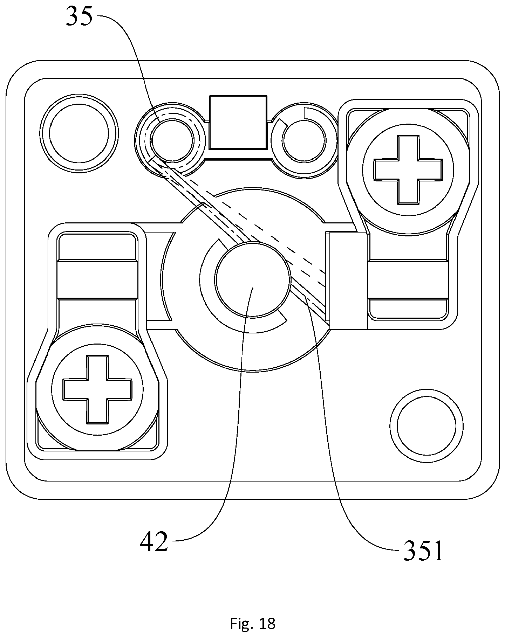

The second locking groove 421' is formed in a side (for example, a lower side illustrated in Figs. 15 and 17) of the said first end of the actuating rod 42 adjacent to a center of the actuating rod 42. When the second contact 21 is in the contact position, due to an own torsion effect of the locking torsion spring 35, the said second end 351 of the locking torsion spring 35 abuts against an outer circumferential wall of the said first end of the actuating rod 42, as illustrated in Figs. 15 and 16. When the pressure within the pressure appliance 200 such as the electric pressure cooker is abnormal, the actuating rod 42 will be moved upwards. During this process, the said second end 351 of the locking torsion spring 35 will move downwards relative to the actuating rod 42 and along a side wall of the actuating rod 42, and the second end 351 of the locking torsion spring 35 will enter the second locking groove 421' and abut against an inner wall of the second locking groove 421' due to a torsions effect of the locking torsion spring 35, as illustrated in Figs. 17 and 18. In this case, the actuating rod 42 will not move downwards due to a position-limiting effect of the locking torsion spring 35, such that the second switch terminal 2 cannot return to the contact position where the second contact 21 is kept in contact with the first contact 11, thereby effectively ensuring the use safety of the pressure appliance 200 such as the electric pressure cooker.

Optionally, the second locking groove 421' is formed as an annular groove extending in a circumferential direction of the actuating rod 42, which simplifies the machining process of the actuating rod 42 and facilitates the mounting of the actuating rod 42, thereby improving the assembling efficiency and reducing the cost. Certainly, the second locking groove 421' may also be formed by inwards recessing a part of the actuating rod 42 in the circumferential direction (not illustrated). It should be understood that, a specific shape of the second locking groove 421' can be specifically provided according to actual requirements, as long as the second locking groove 421' can be fitted with the locking torsion spring 35 to lock the actuating rod 42 when the second contact 21 is in the disconnected position.

The structures of the first switch terminal 1, the second switch terminal 2, the actuating device and the sealing device 6 of the overpressure protection switch 100 in the present embodiment is similar to those in embodiment 4, which thus will not be described in detail herein.

The overpressure protection switch 100 according to embodiments of the present disclosure may cut off the power source when the pressure within the pressure appliance 200 such as the electric pressure cooker is between 140kPa and 200kPa, thereby achieving the overpressure protection. The principle of this kind of overpressure protection switch 100 is explained as follows. Steam within the pressure appliance 200 such as the electric pressure cooker enters the switch body 5 through the communicating opening 51. When the steam pressure is greater than the elastic force of the elastic resetting member 43 such as the spring, the steam jacks the sealing device 6 up to drive the actuating rod 42 to move so as to actuate the second switch terminal 2. The second switch terminal 2 will prop upwards after being stressed, such that the second contact 21 of the second switch terminal 2 moves upwards along with the second switch terminal 2, so as to separate the first contact 11 from the second contact 21. With the actuating rod 42 moving upwards, when the actuating rod 42 rises to the position where the second locking groove 421' in the actuating rod 42 is substantially aligned with the locking torsion spring 35, the locking torsion spring 35 will snap into the locking groove under the action of its own torsion so as to lock the actuating rod 42, such that the actuating rod 42 cannot reset when the pressure within the pressure appliance 200 such as the electric pressure cooker is reduced. Since the actuating rod 42 cannot return, the second switch terminal 2 cannot return to the position where the second contact 21 is in contact with the first contact 11, thereby effectively enhancing the pressure protection, improving the safety of the pressure appliance 200 such as the electric pressure cooker, and proving more safety and reliability in comparison to the conventional mechanical pressure relief structure.

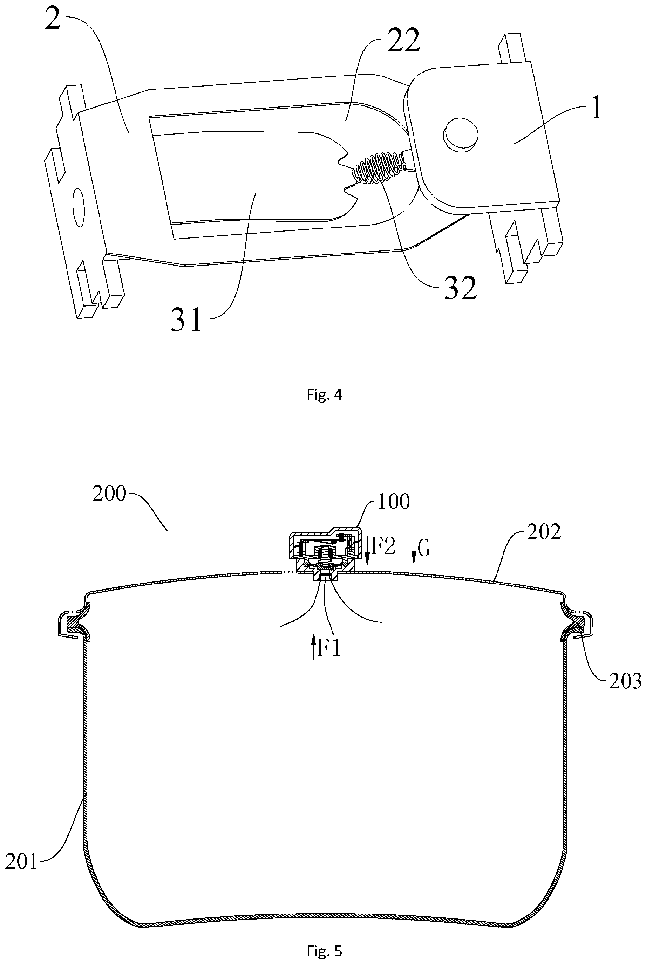

As illustrated in Figs. 5, 19 and 20, the pressure appliance 200 such as the electric pressure cooker according to embodiments of a second aspect of the present disclosure includes an appliance body and an overpressure protection switch 100. The overpressure protection switch 100 is the overpressure protection switch 100 according to the above embodiments of the first aspect of the present disclosure.

The overpressure protection switch 100 is disposed at a top of the appliance body, and the environmental pressure is a pressure within the appliance body. When the pressure within the appliance body reaches the predetermined pressure, the sealing device 6 drives the actuating device to actuate the second switch terminal 2. Specifically, referring to Figs. 5, 19 and 20, when the pressure within the appliance body reaches the predetermined pressure, the sealing device 6 drives the actuating device to move upwards, horizontally or downwards so as to actuate the second switch terminal 2.

According to a specific embodiment of the present disclosure, as illustrated in Fig. 5, the appliance body includes a cooker body 201 and a cover 202, the cooker body 201 has an open top, and the cover 202 is disposed to the top of the cooker body 201 and covers the top of the cooker body 201s. The overpressure protection switch 100 is disposed to the cover 202, and located at a center of the cover 202. Further, the overpressure protection switch 100 is disposed vertically, in which case the communicating opening 51 can be directly communicated with an interior of the cooker body 201, and the pressure within the cooker body 201 can act on a bottom of the actuating device directly through the communicating opening 51, such that the actuating device can be moved upwards to actuate the second switch terminal 2. A seal member 203 is provided between the cooker body 201 and the cover 202 to ensure a sealing performance between the cooker body 201 and the cover 202.

When the pressure within the appliance body just reaches the predetermined pressure, there is:

$$F1 = F2 + G = P \times S,$$

in which, F1 is a pressure applied to the bottom of the sealing device 6; F2 is an elastic force of the elastic resetting member 43; G is a dead weight of the actuating mechanism such as a push rod and the elastic resetting member 43; P is the pressure within the appliance body, a value of P ranges from 120kPa to 200kPa (including endpoint values); S is an pressure stress area of the environmental pressure on the sealing device 6 (for example, as illustrated in Fig. 5, S is the pressure stress area of the pressure within the appliance body on the bottom of the sealing device 6), and indicates an area size between the steam and the stress contact.

Thus, the stress of the elastic resetting member 43 for controlling the power-off pressure can be obtained by conversions of the above values.

Specifically, under the action of the second switch terminal 2, a stress applied on the bottom of the sealing device 6 is denoted as F1=P×S, and meanwhile, F1=F2+G. Thus, the stress of the elastic resetting member 43 for controlling the power-off pressure can be obtained by conversions through the above formula. For example, when a value of S ranges from $1mm^2$ to $100mm^2$ (including the endpoint values), and a value of F1 ranges from 0.1N to 20N, it is easy for the stress of the elastic resetting member 43 to be determined.

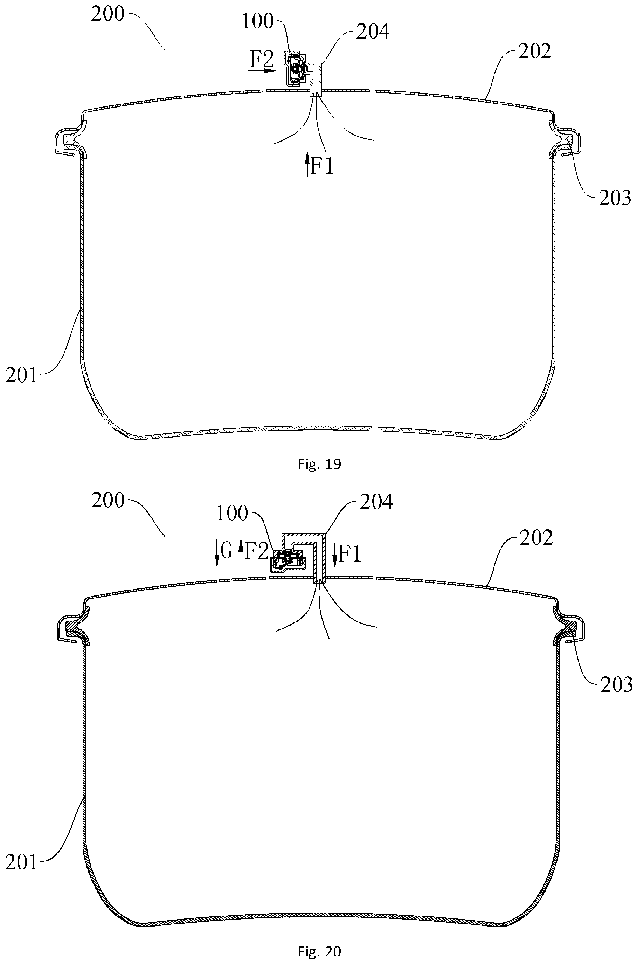

According to another specific embodiment of the present disclosure, as illustrated in Fig. 19, the whole overpressure protection switch 100 is provided while being integrally rotated by 90°, and the overpressure protection switch 100 can be rotated anticlockwise by 90°. Certainly, the overpressure protection switch 100 can also be rotated clockwise by 90° (not illustrated). In this case, the pressure within the pressure appliance 200 such as the electric pressure cooker is horizontally applied to the actuating device to horizontally actuate the first triggering member 31, and further to drive the second switch terminal 2 to act, i.e. an actuation direction of the overpressure protection switch 100 is the horizontal direction.

Specifically, the communicating opening 51 can be communicated with the appliance body through a communicating pipe, as illustrated in Fig. 5, the communicating pipe is an inverted L-shaped pipe, which thus has a simple processing and a low cost, but is not limited to this. The pressure within the appliance body is horizontally applied to the actuating device through the communicating pipe. When the pressure within the appliance body is greater than the predetermined pressure, the pressure within the appliance body can be horizontally applied to the actuating device, such that the actuating device can actuate the second switch terminal 2. It should be understood that, a specific shape of the communicating pipe can be specifically provided according to actual requirements, as long as the pressure within the appliance body can be horizontally applied to the actuating device.

When the pressure within the appliance body just reaches the predetermined pressure, there is:

$$F1=F2=P\times S,$$

in which F1 is a pressure applied to the bottom of the sealing device 6; F2 is an elastic force of the elastic resetting member 43; P is the pressure within the appliance body, a value of P ranges from 120kPa to 200kPa (including the endpoint values); S is a pressure stress area of the environmental pressure on the sealing device 6 (for example, as illustrated in Fig. 19, S is a pressure stress area of the pressure within the appliance body on a side surface of the sealing device 6), and indicates an area size between the steam and the stress contact, in which S satisfies: $1mm^2 \geq S \geq 100mm^2$.

Thus, the stress of the elastic resetting member 43 for controlling the power-off pressure can be obtained by conversions of the above values.

Specifically, under the action of the second switch terminal 2, a stress acted on the bottom of the sealing device 6 is denoted as $F1=P\times S$, and meanwhile, F1=F2. Thus, the stress of the elastic resetting member 43 for controlling the power-off pressure can be obtained by conversions through the above formula.

According to still another specific embodiment of the present disclosure, as illustrated in Fig. 20, the overpressure protection switch 100 can be provided while being integrally rotated by 180°, in which case the pressure within the pressure appliance 200 such as the electric pressure cooker is downwards applied to the actuating device to downwards actuate the first triggering member 31, and further to drive the second switch terminal 2 to act. The overpressure protection switch 100 is reversely mounted, and the actuation direction of the overpressure protection switch 100 is downward.

When the pressure within the appliance body just reaches the predetermined pressure, there is:

$$F1=F2-G=P\times S,$$

in which F1 is a pressure applied to the bottom of the sealing device 6; F2 is an elastic force of the elastic resetting member 43; G is a dead weight of the actuating mechanism such as the push rod and the elastic resetting member 43; P is the pressure within the appliance body, a value of P ranges from 120kPa to 200kPa (including endpoint values); S is a pressure stress area of the environmental pressure on the sealing device 6 (for example, as illustrated in Fig. 20, S is a pressure stress area of the pressure within the appliance body on a top surface of the sealing device 6), and indicates an area size between the steam and the stress contact.

Thus, the stress of the elastic resetting member 43 for controlling the power-off pressure can be obtained by conversions of the above values.

Specifically, under the action of the second switch terminal 2, a stress acted on the bottom of the sealing device 6 is denoted as $F1=P\times S$, and meanwhile, F1=F2-G. Thus, the stress of the elastic resetting member 43 for controlling the power-off pressure can be obtained by conversions through the above formula. For example, when a value of S ranges from $1mm^2$ to $100mm^2$ (including the endpoint values), a value of F1 ranges from 0.1N to 20N (including endpoint values), and a value of G ranges from 0.1 N to 1N (including endpoint values), it is easy for the stress of the elastic resetting member 43 to be determined.

The pressure appliance 200 such as the electric pressure cooker according to embodiments of the present disclosure can effectively provide a power-off protection for abnormal pressure, and also reduce the cost.

Other constitutions and operations of the pressure appliance 200 such as the electric pressure cooker according to embodiments of the present disclosure are well known by those skilled in the art, and hence will not be described in detail herein.

Reference throughout this specification to "an embodiment," "some embodiments," "an illustrative embodiment""an example," "a specific example," or "some examples," means that a particular feature, structure, material, or characteristic described in connection with the embodiment or example is included in at least one embodiment or example of the present disclosure. Thus, the appearances of the phrases in various places throughout this specification are not necessarily referring to the same embodiment or example of the present disclosure. Furthermore, the particular features, structures, materials, or characteristics may be combined in any suitable manner in one or more embodiments or examples.

Although embodiments of the present disclosure have been shown and illustrated, it shall be understood by those skilled in the art that various changes, modifications, alternatives and variants without departing from scope of the present disclosure, which is defined by the claims.

## Claims

1. An overpressure protection switch (100), comprising:

   a switch body (5) defining a communicating opening (51);
   a first switch terminal (1) disposed in the switch body (5) and having a first contact (11);
   a second switch terminal (2) disposed in the switch body (5), a first end of the second switch terminal (2) being a fixed end, a second end of the second switch terminal (2) being a movable end and having a second contact (21), and the second contact (21) being normally in contact with the first contact (11);
   the switch body (5) is provided with a fixing seat (41) therein, the fixing seat (41) defines a guiding hole (411);
   an actuating device disposed between the second switch terminal (2) and the communicating opening (51);
   the actuating device comprises:

   an actuating rod (42) disposed in the guiding hole (411), a first end of the actuating rod (42) being configured to extend out of the guiding hole (411) to actuate the second switch terminal (2), and a second end of the actuating rod (42) being connected to the sealing device (6); and
   a sealing device (6) disposed at the communicating opening (51) to isolate an interior of the switch body (5) from the communicating opening (51), and the sealing device (6) being connected to the actuating device;

   wherein when an environmental pressure applied by an external environment through the communicating opening (51) reaches a predetermined pressure, the sealing device (6) drives the actuating device to actuate the second switch terminal (2), such that the second contact (21) moves from a contact position where the second contact (21) is normally in contact with the first contact (11) to a disconnected position where the second contact (21) is separated from the first contact (11),
   **characterized in that,**
   the first switch terminal (1) and the second switch terminal (2) are fixed to the fixing seat (41); and
   a holding device (3) is disposed in the switch body (5), and the holding device (3) keeps the second contact (21) in the disconnected position; and
   an elastic resetting member (43) is disposed in the guiding hole (411), the elastic resetting member (43) being configured to constantly push the actuating rod (42) in a direction running away from the second switch terminal(2).

2. The overpressure protection switch (100) according to claim 1, wherein the second switch terminal (2) defines a first opening (22) between the first end and the second end thereof, and the first opening (22) runs through the second switch terminal (2), the holding device (3) comprises:

   a first triggering member (31) connected to a side wall of the first opening (22) adjacent to the first end of the second switch terminal (2); and
   an elastic retainer (32) connected to a free end of the first triggering member (31), and connected to a side wall of the first opening (22) adjacent to the second end of the second switch terminal (2).

3. The overpressure protection switch (100) according to claim 2, wherein the first triggering member (31) is an elastic piece,

   when the second contact (21) is in the contact position, the first triggering member (31) and the elastic retainer (32) are located at a side of the second switch terminal (2) adjacent to the actuating device,
   when the second contact (21) is in the disconnected position, the first triggering member (31) and the elastic retainer (32) are located at a side of the second switch terminal (2) away from the actuating device, and the elastic retainer (32) is a compression spring.

4. The overpressure protection switch (100) according to claim 1, wherein the second switch terminal (2) defines a second opening (22') between the first end and the second end thereof, and the second opening (22') runs through the second switch terminal (2), the holding device (3) comprises:

a second triggering member (31') connected to a side wall of the second opening (22') adjacent to the first end of the second switch terminal (2), the triggering member being configured as a convex surface that protrudes towards the actuating device when the second contact (21) is in the contact position, and configured as a convex surface that protrudes away from the actuating device when the second contact (21) is in the disconnected position; and
a retainer (32') connected to a free end of the second triggering member (31'), and connected to a side wall of the opening adjacent to the second end of the second switch terminal (2).

5. The overpressure protection (100) switch according to claim 1, wherein the second switch terminal (2) is formed as a convex surface that protrudes towards the actuating device when the second contact (21) is in the contact position, and formed as a convex surface that protrudes away from the actuating device when the second contact (21) is in the disconnected position.

6. The overpressure protection switch (100) according to claim 5, wherein the second switch terminal (2) defines a third opening (22") between the first end and the second end thereof, the third opening (22") runs through the second switch terminal (2), a side wall of the third opening (22") adjacent to the first end of the second switch terminal (2) is provided with a tongue piece (23), and the actuating device is configured to actuate the tongue piece (23).

7. The overpressure protection switch (100) according to claim 1, wherein one of the actuating device and the switch body (5) is provided with the holding device (3), and the other one of the actuating device and the switch body defines a first locking groove (421), when the second contact (21) is in the disconnected position, the holding device (3) is fitted with the first locking groove (421) to lock the actuating device so as to hold the second contact (21) in the disconnected position.

8. The overpressure protection switch (100) according to claim 7, wherein the one of the actuating device and the switch body (5) defines a containing groove (52), the holding device (3) comprises:

a locking member (33) disposed in the containing groove (52); and
an elastic member (34) disposed between an inner wall of the containing groove (52) and the locking member (33), and the elastic member (34) being configured to constantly push the locking member (33) in a direction running away from the one of the actuating device and the switch body (5).

9. The overpressure protection switch (100) according to claim 1, wherein the actuating device defines a second locking groove (421'), the holding device (3) is a locking torsion spring (351), a first end of the locking torsion spring (351) is a fixed end, a second end of the locking torsion spring (351) is a movable end, and the second end of the locking torsion spring (351) is configured to be fitted in the second locking groove (421') to hold the second contact (21) in the disconnected position.

10. The overpressure protection switch (100) according to any one of claims 1 to 9, wherein the sealing device (6) is a sealing piece,

when the second contact (21) is in the contact position, the sealing device (6) protrudes towards the communicating opening (51) to block off the communicating opening (51), when the second contact (21) is in the disconnected position, the sealing device (6) protrudes in a direction running away from the communicating opening (51) to push the actuating device.

11. The overpressure protection switch (100) according to any one of claims 1 to 10, wherein a pressure stress area of the environmental pressure on the sealing device is denoted as S, and S satisfies: $1mm^2 \geq S \geq 100mm^2$; and/or wherein the predetermined pressure is denoted as P, and P satisfies: $140kPa \geq P \geq 200kPa$.

12. A pressure appliance (200), comprising;

an appliance body; and
an overpressure protection switch (100) according to any one of claims 1 to 11, the overpressure protection switch (100) being disposed to a top of the appliance body, wherein the environmental pressure is a pressure within the appliance body, and when the pressure within the appliance body reaches the predetermined pressure, the sealing device (6) drives the actuating device to actuate the second switch terminal (2).

**13.** The pressure appliance (200) according to claim 12, wherein when the pressure within the appliance body reaches the predetermined pressure, the sealing device (6) drives the actuating device to move upwards, horizontally or downwards so as to actuate the second switch terminal (2).

**14.** The pressure appliance according to claim 12 or 13, wherein the pressure appliance (200) is an electric pressure cooker or an electric pressure pot.

**Patentansprüche**

**1.** Überdruckschutzschalter (100), umfassend:

einen Schalterkörper (5), der eine Verbindungsöffnung (51) definiert;
einen ersten Schalteranschluss (1), der in dem Schalterkörper (5) angeordnet ist und einen ersten Kontakt (11) aufweist;
einen zweiten Schalteranschluss (2), der in dem Schalterkörper (5) angeordnet ist, wobei ein erstes Ende des zweiten Schalteranschlusses (2) ein festes Ende ist, ein zweites Ende des zweiten Schalteranschlusses (2) ein bewegliches Ende ist und einen zweiten Kontakt (21) aufweist, und der zweite Kontakt (21) in Arbeitskontakt mit dem ersten Kontakt (11) ist;
der Schalterkörper (5) ist mit einem Befestigungssitz (41) darin versehen, der Befestigungssitz (41) definiert ein Führungsloch (411);
eine Betätigungsvorrichtung, die zwischen dem zweiten Schalteranschluss (2) und der Verbindungsöffnung (51) angeordnet ist;
die Betätigungsvorrichtung umfasst Folgendes:

eine Betätigungsstange (42), die in dem Führungsloch (411) angeordnet ist, wobei ein erstes Ende der Betätigungsstange (42) so ausgebildet ist, dass sie sich aus dem Führungsloch (411) erstreckt, um den zweiten Schalteranschluss (2) zu betätigen, und ein zweites Ende der Betätigungsstange (42) mit der Dichtungsvorrichtung (6) verbunden ist; und
eine Dichtungsvorrichtung (6), die an der Verbindungsöffnung (51) angeordnet ist, um ein Inneres des Schalterkörpers (5) von der Verbindungsöffnung (51) zu isolieren, und wobei die Dichtungsvorrichtung (6) mit der Betätigungsvorrichtung verbunden ist;

wobei, wenn ein von einer äußeren Umgebung durch die Verbindungsöffnung (51) ausgeübter Umgebungsdruck einen vorbestimmten Druck erreicht, die Dichtungsvorrichtung (6) die Betätigungsvorrichtung veranlasst, den zweiten Schalteranschluss (2) zu betätigen, so dass sich der zweite Kontakt (21) aus einer Kontaktposition, in der der zweite Kontakt (21) in Arbeitskontakt mit dem ersten Kontakt (11) ist, in eine Trennposition bewegt, in der der zweite Kontakt (21) von dem ersten Kontakt (11) getrennt ist, **dadurch gekennzeichnet, dass**
der erste Schalteranschluss (1) und der zweite Schalteranschluss (2) an dem Befestigungssitz (41) befestigt sind; und
eine Haltevorrichtung (3) im Schalterkörper angeordnet ist, und die Haltevorrichtung (3) den zweiten Kontakt (21) in der Trennposition hält; und
ein elastisches Rückstellelement (43) in dem Führungsloch (411) angeordnet ist, wobei das elastische Rückstellelement (43) so ausgebildet ist, dass es die Betätigungsstange (42) konstant in eine Richtung drückt, die von dem zweiten Schalteranschluss (2) weg verläuft.

**2.** Überdruckschutzschalter (100) gemäß Anspruch 1, wobei der zweite Schalteranschluss (2) eine erste Öffnung (22) zwischen dem ersten Ende und dem zweiten Ende davon definiert und die erste Öffnung (22) durch den zweiten Schalteranschluss (2) verläuft,
die Haltevorrichtung (3) Folgendes umfasst:

ein erstes Auslöseelement (31), das mit einer Seitenwand der ersten Öffnung (22) neben dem ersten Ende des zweiten Schalteranschlusses (2) verbunden ist; und
einen elastischen Halter (32), der mit einem freien Ende des ersten Auslöseelements (31) verbunden ist und mit einer Seitenwand der ersten Öffnung (22) neben dem zweiten Ende des zweiten Schalteranschlusses (2) verbunden ist.

**3.** Überdruckschutzschalter (100) gemäß Anspruch 2, wobei das erste Auslöseelement (31) ein elastisches Teil ist,

wenn sich der zweite Kontakt (21) in der Kontaktposition befindet, sich das erste Auslöseelement (31) und der elastische Halter (32) an einer Seite des zweiten Schalteranschlusses (2) neben der Betätigungsvorrichtung befinden,
wenn sich der zweite Kontakt (21) in der Trennposition befindet, sich das erste Auslöseelement (31) und der elastische Halter (32) an einer Seite des zweiten Schalteranschlusses (2) weg von der Betätigungsvorrichtung befinden, und der elastische Halter (32) eine Druckfeder ist.

**4.** Überdruckschutzschalter (100) gemäß Anspruch 1, wobei der zweite Schalteranschluss (2) eine zweite Öffnung (22') zwischen dem ersten Ende und dem zweiten Ende davon definiert und die zweite Öffnung (22') durch den zweiten Schalteranschluss (2) verläuft,
die Haltevorrichtung (3) Folgendes umfasst:

ein zweites Auslöseelement (31'), das mit einer Seitenwand der zweiten Öffnung (22') neben dem ersten Ende des zweiten Schalteranschlusses (2) verbunden ist, wobei das Auslöseelement als eine konvexe Fläche ausgebildet ist, die in Richtung der Betätigungsvorrichtung vorsteht, wenn sich der zweite Kontakt (21) in der Kontaktposition befindet, und als konvexe Fläche ausgebildet ist, die von der Betätigungsvorrichtung weg vorsteht, wenn sich der zweite Kontakt (21) in der Trennposition befindet; und einen Halter (32'), der mit einem freien Ende des zweiten Auslöseelements (31') verbunden ist und mit einer Seitenwand der Öffnung neben dem zweiten Ende des zweiten Schalteranschlusses (2) verbunden ist.

5. Überdruckschutzschalter (100) gemäß Anspruch 1, wobei der zweite Schalteranschluss (2) als konvexe Fläche ausgebildet ist, die zur Betätigungsvorrichtung hin vorsteht, wenn sich der zweite Kontakt (21) in der Kontaktposition befindet, und als konvexe Fläche ausgebildet ist, die von der Betätigungsvorrichtung weg vorsteht, wenn sich der zweite Kontakt (21) in der Trennposition befindet.

6. Überdruckschutzschalter (100) gemäß Anspruch 5, wobei der zweite Schalteranschluss (2) eine dritte Öffnung (22") zwischen dem ersten Ende und dem zweiten Ende davon definiert, die dritte Öffnung (22") durch den zweiten Schalteranschluss (2) verläuft, eine Seitenwand der dritten Öffnung (22") neben dem ersten Ende des zweiten Schalteranschlusses (2) mit einem Zungenstück (23) versehen ist, und die Betätigungsvorrichtung so ausgebildet ist, dass sie das Zungenstück (23) betätigt.

7. Überdruckschutzschalter (100) gemäß Anspruch 1, wobei entweder der Betätigungsvorrichtung oder der Schalterkörpers (5) mit der Haltevorrichtung (3) versehen ist und das andere der Betätigungsvorrichtung und des Schalterkörpers eine erste Verriegelungsnut (421) definiert,
wenn sich der zweite Kontakt (21) in der Trennposition befindet, die Haltevorrichtung (3) mit der ersten Verriegelungsnut (421) versehen ist, um die Betätigungsvorrichtung zu verriegeln, um den zweiten Kontakt (21) in der Trennposition zu halten.

8. Überdruckschutzschalter (100) gemäß Anspruch 7, wobei entweder der Betätigungsvorrichtung oder der Schalterkörpers (5) eine Aufnahmenut (52) definiert, die Haltevorrichtung (3) Folgendes umfasst:

ein Verriegelungselement (33), das in der Aufnahmenut (52) angeordnet ist; und
ein elastisches Element (34), das zwischen einer Innenwand der Aufnahmenut (52) und dem Verriegelungselement (33) angeordnet ist, und das elastische Element (34) so ausgebildet ist, dass es das Verriegelungselement (33) konstant in eine Richtung drückt, die von der Betätigungsvorrichtung oder der Schalterkörpers (5) weg verläuft.

9. Überdruckschutzschalter (100) gemäß Anspruch 1, wobei die Betätigungsvorrichtung eine zweite Verriegelungsnut (421') definiert,
die Haltevorrichtung (3) eine Verriegelungstorsionsfeder (351) ist, ein erstes Ende der Verriegelungstorsionsfeder (351) ein festes Ende ist, ein zweites Ende der Verriegelungstorsionsfeder (351) ein bewegliches Ende ist, und das zweite Ende der Verriegelungstorsionsfeder (351) so ausgebildet ist, dass es in die zweite Verriegelungsnut (421') eingepasst wird, um den zweiten Kontakt (21) in der getrennten Position zu halten.

10. Überdruckschutzschalter (100) gemäß einem der Ansprüche 1 bis 9, wobei die Dichtungsvorrichtung (6) ein Dichtungsstück ist,

wenn sich der zweite Kontakt (21) in der Kontaktposition befindet, die Dichtungsvorrichtung (6) in Richtung der Verbindungsöffnung (51) vorsteht, um die Verbindungsöffnung (51) zu verschließen,
wenn sich der zweite Kontakt (21) in der Trennposition befindet, die Dichtungsvorrichtung (6) in eine Richtung vorsteht, die von der Verbindungsöffnung (51) weg verläuft, um die Betätigungseinrichtung zu drücken.

11. Überdruckschutzschalter (100) gemäß einem der Ansprüche 1 bis 10, wobei ein Druckbelastungsbereich des Umgebungsdrucks auf die Dichtungsvorrichtung als S bezeichnet wird und S Folgendes erfüllt: 1 mm$^2 \geq$ S $\geq$ 100 mm$^2$; und /oder wobei der vorbestimmte Druck als P bezeichnet wird und P Folgendes erfüllt: 140 kPa $\geq$ P $\geq$ 200 kPa.

12. Druckgerät (200), umfassend:

einen Gerätekörper; und
einen Überdruckschutzschalter (100) gemäß einem der Ansprüche 1 bis 11, wobei der Überdruckschutzschalter (100) an einer Oberseite des Gerätekörpers angeordnet ist, wobei der Umgebungsdruck ein Druck innerhalb des Gerätekörpers ist, und wenn der Druck innerhalb des Gerätekörpers den vorbestimmten Druck erreicht, die Dichtungsvorrichtung (6) die Betätigungsvorrichtung veranlasst, den zweiten Schalteranschluss (2) zu betätigen.

**13.** Druckgerät (200) gemäß Anspruch 12, wobei, wenn der Druck innerhalb des Gerätekörpers den vorbestimmten Druck erreicht, die Dichtungsvorrichtung (6) die Betätigungsvorrichtung veranlasst, sich nach oben, horizontal oder nach unten zu bewegen, um den zweiten Schalteranschluss (2) zu betätigen.

**14.** Druckgerät gemäß Anspruch 12 oder 13, wobei das Druckgerät (200) ein elektrischer Schnellkochtopf oder ein elektrischer Drucktopf ist.

## Revendications

**1.** Commutateur de protection contre les surpressions (100), comprenant :

un corps de commutateur (5) définissant une ouverture de communication (51) ;
une première borne de commutateur (1) disposée dans le corps de commutateur (5) et comportant un premier contact (11) ;
une deuxième borne de commutateur (2) disposée dans le corps de commutateur (5), une première extrémité de la deuxième borne de commutateur (2) étant une extrémité fixe, une deuxième extrémité de la deuxième borne de commutateur (2) étant une extrémité mobile et comportant un deuxième contact (21), et le deuxième contact (21) étant normalement en contact avec le premier contact (11) ;
le corps de commutateur (5) étant pourvu d'un siège de fixation (41) dans celui-ci, le siège de fixation (41) définissant un trou de guidage (411) ;
un dispositif d'actionnement disposé entre la deuxième borne de commutateur (2) et l'ouverture de communication (51) ;
le dispositif d'actionnement comprenant :

une tige d'actionnement (42) disposée dans le trou de guidage (411), une première extrémité de la tige d'actionnement (42) étant configurée de manière à s'étendre à l'extérieur du trou de guidage (411) pour actionner la deuxième borne de commutateur (2), et une deuxième extrémité de la tige d'actionnement (42) étant reliée au dispositif d'étanchéité (6) ; et
un dispositif d'étanchéité (6) disposé au niveau de l'ouverture de communication (51) pour isoler un intérieur du corps de commutateur (5) par rapport à l'ouverture de communication (51), et le dispositif d'étanchéité (6) étant relié au dispositif d'actionnement ;

dans lequel, lorsqu'une pression environnementale appliquée par un environnement extérieur à travers l'ouverture de communication (51) atteint une pression prédéterminée, le dispositif d'étanchéité (6) amène le dispositif d'actionnement à actionner la deuxième borne de commutateur (2), de telle façon que le deuxième contact (21) se déplace d'une position de contact dans laquelle le deuxième contact (21) est normalement en contact avec le premier contact (11) vers une position déconnectée dans laquelle le deuxième contact (21) est séparé du premier contact (11),
**caractérisé en ce que**
la première borne de commutateur (1) et la deuxième borne de commutateur (2) sont fixées au siège de fixation (41) ; et
un dispositif de maintien (3) est disposé dans le corps de commutateur (5), et le dispositif de maintien (3) retient le deuxième contact (21) dans la position déconnectée ; et
un élément de rappel élastique (43) est disposé dans le trou de guidage (411), l'élément de rappel élastique (43) étant configuré pour pousser constamment la tige d'actionnement (42) dans une direction à distance de la deuxième borne de commutateur (2).

**2.** Commutateur de protection contre les surpressions (100) selon la revendication 1, dans lequel la deuxième borne de commutateur (2) définit une première ouverture (22) entre la première extrémité et la deuxième extrémité de celle-ci, et la première ouverture (22) s'étend à travers la deuxième borne de commutateur (2),
le dispositif de maintien (3) comprend :

un premier élément de déclenchement (31) relié à une paroi latérale de la première ouverture (22) adjacente à la première extrémité de la deuxième borne de commutateur (2) ; et
un moyen de retenue élastique (32) relié à une extrémité libre du premier élément de déclenchement (31), et relié à une paroi latérale de la première ouverture (22) adjacente à la deuxième extrémité de la deuxième borne de commutateur (2).

**3.** Commutateur de protection contre les surpressions (100) selon la revendication 2, dans lequel le premier élément de déclenchement (31) est une pièce élastique,

lorsque le deuxième contact (21) est dans la position de contact, le premier élément de déclenchement (31) et le moyen de retenue élastique (32) se trouvent sur un côté de la deuxième borne de commutateur (2) adjacent au dispositif d'actionnement,
lorsque le deuxième contact (21) est dans la position déconnectée, le premier élément de déclenchement (31) et le moyen de retenue élastique (32) se trouvent sur un côté de la deuxième borne de commutateur (2) à distance du dispositif d'actionnement, et le moyen de retenue élastique (32) est un ressort de compression.

4. Commutateur de protection contre les surpressions (100) selon la revendication 1, dans lequel la deuxième borne de commutateur (2) définit une deuxième ouverture (22') entre la première extrémité et la deuxième extrémité de celle-ci, et la deuxième ouverture (22') s'étend à travers la deuxième borne de commutateur (2),
le dispositif de maintien (3) comprend :

un deuxième élément de déclenchement (31') relié à une paroi latérale de la deuxième ouverture (22') adjacente à la première extrémité de la deuxième borne de commutateur (2), l'élément de déclenchement étant configuré comme une surface convexe faisant saillie vers le dispositif d'actionnement lorsque le deuxième contact (21) est dans la position de contact, et configuré comme une surface convexe faisant saillie à distance du dispositif d'actionnement lorsque le deuxième contact (21) est dans la position déconnectée ; et
un moyen de retenue (32') relié à une extrémité libre du deuxième élément de déclenchement (31') et relié à une paroi latérale de l'ouverture adjacente à la deuxième extrémité de la deuxième borne de commutateur (2).

5. Commutateur de protection contre les surpressions (100) selon la revendication 1, dans lequel la deuxième borne de commutateur (2) est formée comme une surface convexe faisant saillie vers le dispositif d'actionnement lorsque le deuxième contact (21) est dans la position de contact, et formée comme une surface convexe faisant saillie à distance du dispositif d'actionnement lorsque le deuxième contact (21) est dans la position déconnectée.

6. Commutateur de protection contre les surpressions (100) selon la revendication 5, dans lequel la deuxième borne de commutateur (2) définit une troisième ouverture (22") entre la première extrémité et la deuxième extrémité de celle-ci, la troisième ouverture (22") s'étend à travers la deuxième borne de commutateur (2), une paroi latérale de la troisième ouverture (22") adjacente à la première extrémité de la deuxième borne de commutateur (2) est pourvue d'une pièce en forme de langue (23), et le dispositif d'actionnement est configuré pour actionner la pièce en forme de langue (23).

7. Commutateur de protection contre les surpressions (100) selon la revendication 1, dans lequel l'un parmi le dispositif d'actionnement et le corps de commutateur (5) est doté du dispositif de maintien (3), et l'autre parmi le dispositif d'actionnement et le corps de commutateur définit une première rainure de blocage (421),
lorsque le deuxième contact (21) est dans la position déconnectée, le dispositif de maintien (3) est ajusté avec la première rainure de blocage (421) pour bloquer le dispositif d'actionnement de manière à maintenir le deuxième contact (21) dans la position déconnectée.

8. Commutateur de protection contre les surpressions (100) selon la revendication 7, dans lequel l'un parmi le dispositif d'actionnement et le corps de commutateur (5) définit une rainure de réception (52),
le dispositif de maintien (3) comprend :

un élément de blocage (33) disposé dans la rainure de réception (52) ; et
un élément élastique (34) disposé entre une paroi intérieure de la rainure de réception (52) et l'élément de blocage (33), et l'élément élastique (34) étant configuré pour pousser constamment l'élément de blocage (33) dans une direction à distance de l'un parmi le dispositif d'actionnement et le corps de commutateur (5).

9. Commutateur de protection contre les surpressions (100) selon la revendication 1, dans lequel le dispositif d'actionnement définit une deuxième rainure de blocage (421'),
le dispositif de maintien (3) est un ressort de torsion de blocage (351), une première extrémité du ressort de torsion de blocage (351) est une extrémité fixe, une deuxième extrémité du ressort de torsion de blocage (351) est une extrémité mobile, et la deuxième extrémité du ressort de torsion de blocage (351) est configurée pour être ajustée dans la deuxième rainure de blocage (421') pour maintenir le deuxième contact (21) dans la position déconnectée.

10. Commutateur de protection contre les surpressions (100) selon l'une quelconque des revendications 1 à 9, dans lequel le dispositif d'étanchéité (6) est une pièce d'étanchéité,

lorsque le deuxième contact (21) est dans la position de contact, le dispositif d'étanchéité (6) fait saillie vers l'ouverture de communication (51) pour bloquer l'ouverture de communication (51),
lorsque le deuxième contact (21) est dans la position déconnectée, le dispositif d'étanchéité (6) fait saillie dans une direction à distance de l'ouverture de communication (51) pour pousser le dispositif d'actionnement.

11. Commutateur de protection contre les surpressions (100) selon l'une quelconque des revendications 1 à 10, dans lequel une zone de contrainte de pression de la pression environnementale sur le dispositif d'étanchéité est désignée comme S, et S satisfait à : $1mm^2 \geq S \geq 100mm^2$ ; et/ou dans lequel la pression prédéterminée est désignée comme P, et P satisfait à : $140kPa \geq P \geq 200kPa$ .

12. Appareil à pression (200), comprenant :

    un corps d'appareil ; et
    un commutateur de protection contre les surpressions (100) selon l'une quelconque des revendications 1 à 11, le commutateur de protection contre les surpressions (100) étant disposé sur une partie supérieure du corps d'appareil, dans lequel la pression environnementale est une pression à l'intérieur du corps d'appareil, et lorsque la pression à l'intérieur du corps d'appareil atteint la pression prédéterminée, le dispositif d'étanchéité (6) amène le dispositif d'actionnement à actionner la deuxième borne de commutateur (2).

13. Appareil à pression (200) selon la revendication 12, dans lequel, lorsque la pression à l'intérieur du corps d'appareil atteint la pression prédéterminée, le dispositif d'étanchéité (6) amène le dispositif d'actionnement à se déplacer vers le haut, horizontalement ou vers le bas de manière à actionner la deuxième borne de commutateur (2).

14. Appareil à pression selon la revendication 12 ou 13, dans lequel l'appareil à pression (200) est un autocuiseur électrique ou une marmite à pression électrique.

Fig. 1

Fig. 2

Fig. 3

Fig. 4

Fig. 5

Fig. 6

Fig. 7

Fig. 8

Fig. 9

2

24

22"

21

23

Fig. 10

100

3

34    33

3

2

21

7

52

11

7

421

1

41

5

6

43

411

422

51

Fig. 11

Fig. 12

Fig. 13

EP 3 318 163 B1

Fig. 14

34

Fig. 15

Fig. 16

Fig. 17

Fig. 18

Fig. 19

Fig. 20

**EP 3 318 163 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202919915 U

- CN 203150472 U